# EUROPEAN PATENT APPLICATION

(11) **EP 4 834 060 A1**
(43) Date of publication of application: **04.11.2026**
(21) Application number: 24911980.1
(22) Date of filing: 25.10.2024
(51) Int. Cl.: A01B 63/10

(54) **INFORMATION DISPLAY SYSTEM, WORK VEHICLE, AND DISPLAY CONTROL METHOD**

(30) Priority: 28.12.2023 JP 2023223519
(71) Applicant: Kubota Corporation, Osaka-shi, Osaka 530-0011 (JP)
(72) Inventor: KAECHI, Shuya, Sakai-shi, Osaka 590-0908 (JP)
(74) Representative: Schlegel, Sebastian
(86) International application number: PCT/JP2024/038185
(87) International publication number: WO 2025/142087

(57) **Abstract**

An information display system includes a digital display, a control device to control the digital display, a storage device to store data of a plurality of guide images that differ depending on a type of an implement, and a camera to acquire a camera image including at least a portion of the implement. Each of the plurality of guide images includes a guide display representing a predicted trajectory of the implement in a direction of travel, the predicted trajectory being predicted in accordance with a type of the implement connected to a work vehicle. The control device causes the digital display to display a superimposed image obtained by superimposing, on the camera image, a guide image determined from among the plurality of guide images in accordance with the type of the implement connected to the work vehicle.

## Description

### TECHNICAL FIELD

The present disclosure relates to information display systems, work vehicles, and display control methods.

### BACKGROUND ART

Research and development of smart agriculture that uses information and communication technology (ICT) and the Internet of things (IoT), as the next-generation agriculture, is under way. Automated and unmanned operations of agricultural machines such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, an engine load state, and the state of each portion of a work vehicle is provided in front of the operator's seat of an agricultural work vehicle such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of works outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

There is an increased demand for such a meter panel not only for agricultural machines but also for construction machines that are used in work in construction sites. Agricultural machines and construction machines that can travel are hereinafter collectively referred to as "work vehicles."

In work vehicles, an implement such as a front loader may be connected, and desired work may be performed. However, the field of view around the work vehicle may be blocked by the vehicle body (e.g., bonnet), and a portion of the implement may be difficult to see from the operator's seat. It is desirable to improve workability.

The present disclosure provides information display systems that can solve such a problem, work vehicles including such information display systems, and display control methods.

### SOLUTION TO PROBLEM

The present disclosure provides solutions described in the following aspects.

### [Item 1]

An information display system for a work vehicle to which an implement is connected, the information display system comprising:
a digital display;
a control device to control the digital display;
a storage device to store data of a plurality of guide images that differ depending on a type of the implement;
a camera to acquire a camera image including at least a portion of the implement;
wherein:
   each of the plurality of guide images includes a guide display representing a predicted trajectory of the implement in a direction of travel, the predicted trajectory being predicted in accordance with a type of the implement connected to the work vehicle; and
   the control device causes the digital display to display a superimposed image obtained by superimposing, on the camera image, a guide image determined from among the plurality of guide images in accordance with the type of the implement connected to the work vehicle.

### [Item 2]

The information display system of item 1, wherein:
the implement includes a marker encoding a type of the implement;
the control device:
   identifies the type of the implement by applying marker recognition to the camera image including the marker; and
   causes the digital display to display the superimposed image obtained by superimposing, on the camera image, the guide image corresponding to the identified type of the implement, from among the plurality of guide images.

### [Item 3]

The information display system of item 1 or 2, wherein each of the plurality of guide images includes an outline display representing a portion of an outline of the implement.

### [Item 4]

The information display system of item 1 or 2, wherein:
the implement is a loader including a tip to which an attachment is detachably attached; and
each of the plurality of guide images includes the guide display representing the predicted trajectory of the implement predicted in accordance with a type of the attachment.

### [Item 5]

The information display system of item 4, wherein:
the camera acquires the camera image including at least a portion of a work target object including a load according to the attachment of the loader;
the control device:
   performs image processing on the camera image to detect a contact portion of the work target object that is in contact with the attachment; and
   causes the digital display to display the superimposed image including an emphasis display that emphasizes the contact portion.

### [Item 6]

The information display system of item 4 or 5, wherein:
each of the plurality of guide images includes the guide display of the attachment in a state in which the attachment is located at a lowest point that is a lower limit of a lifting range;
the control device:
   acquires height information of the attachment relative to the lowest point; and
   corrects the guide display included in the determined guide image based on the height information.

### [Item 7]

The information display system of any one of items 4 to 6, wherein:
the attachment is a fork; and
the control device causes the digital display to display the superimposed image including the guide display on an extension line of the fork, and an outline display representing a portion of an outline of the fork.

### [Item 8]

The information display system of item 5, wherein:
the work target object includes a pallet including an opening into which the fork is inserted; and
the control device causes the digital display to display the superimposed image including the emphasis display that emphasizes the opening.

### [Item 9]

The information display system of any one of items 1 to 8, further comprising a meter panel unit including the digital display.

### [Item 10]

A work vehicle comprising the information display system of any one of items 1 to 9.

### [Item 11]

A control method for controlling display on a digital display mounted on a work vehicle to which an implement is connected, the method comprising:
acquiring a camera image including at least a portion of an implement;
acquiring data of a plurality of guide images that differ depending on a type of the implement, each of the plurality of guide images including a guide display representing a predicted trajectory of the implement in a direction of travel, the predicted trajectory being predicted in accordance with a type of the implement connected to the work vehicle; and
causing the digital display to display a superimposed image obtained by superimposing, on the camera image, a guide image determined from among the plurality of guide images in accordance with the type of the implement connected to the work vehicle.

General or specific aspects of the present disclosure may be implemented using a device, system, method, integrated circuit, computer program, non-transitory computer-readable storage medium, or any combination thereof. The computer-readable storage medium may be inclusive of volatile and non-volatile storage media. A device may include a plurality of devices. In the case in which a device includes two or more devices, the two or more devices may be provided in a single apparatus, or separately arranged in two or more different apparatuses.

### ADVANTAGEOUS EFFECTS OF INVENTION

According to embodiments of the present disclosure, information display systems, work vehicles including such information display systems, and display control methods, each capable of improving workability using an implement, are provided.

### BRIEF DESCRIPTION OF DRAWINGS

- FIG. 1A: is a side view schematically illustrating an example work vehicle according to an embodiment of the present disclosure.
- FIG. 1B: is a diagram illustrating an example of a group of operation switches and an operation terminal provided inside a cabin of a work vehicle.
- FIG. 1C: is a side view schematically illustrating another example work vehicle according to an embodiment of the present disclosure.
- FIG. 1D: is a front view schematically illustrating a meter panel unit in a state of being attached behind a steering wheel positioned in front of an operator's seat of a work vehicle, in an embodiment of the present disclosure.
- FIG. 2: is a front view illustrating an example arrangement of main components of the meter panel unit of this embodiment.
- FIG. 3: is a perspective view illustrating an example configuration of a wall surface portion of the meter panel unit of this embodiment.
- FIG. 4: is a perspective view illustrating an example configuration of a transparent cover of the meter panel unit of this embodiment.
- FIG. 5: is a front view illustrating an example arrangement of indicators of the meter panel unit of this embodiment.
- FIG. 6: is a front view illustrating an example state in which various kinds of information are displayed on a display element of the meter panel unit of this embodiment.
- FIG. 7: is a perspective view of an analog meter in the meter panel unit of this embodiment.
- FIG. 8: is a front view illustrating a positional relationship between a first analog meter, an arc-shaped indicator, and a facing plate.
- FIG. 9: is a front view illustrating an example configuration of an arc-shaped indicator.
- FIG. 10: is a front view illustrating a second analog meter and a second arc-shaped indicator.
- FIG. 11: is a block diagram schematically illustrating an example configuration of an information display system in an embodiment of the present disclosure.
- FIG. 12: is a block diagram illustrating an example hardware configuration of a control device.
- FIG. 13: is a diagram illustrating an example in which a control device is implemented inside a meter panel unit.
- FIG. 14A: is a front view schematically illustrating an example in which an arc with the same color as that of light emitted from a light emitting region of an arc-shaped indicator is displayed.
- FIG. 14B: is a front view schematically illustrating an example in which an arc with the same color as that of light emitted from a light emitting region of an arc-shaped indicator, and another object having an arc with the same color, are displayed.
- FIG. 15: is a diagram illustrating an example of a home screen.
- FIG. 16: is a diagram schematically illustrating an example of segmentation of a display region.
- FIG. 17: is a side view schematically illustrating an example of a work vehicle to which a loader having a fork as an attachment is connected.
- FIG. 18: is a schematic diagram illustrating an example of a superimposed image including a guide display, displayed on a display region of a display element of a meter panel unit.
- FIG. 19: is a flowchart illustrating a procedure of a control method according to a first implementation example in an embodiment of the present disclosure.
- FIG. 20: is a schematic diagram illustrating an example of a guide image including an outline display.
- FIG. 21: is a schematic diagram illustrating an example of a superimposed image dis- played when a work vehicle is traveling forward with a clamp of a bale grab facing the ground.
- FIG. 22: is a schematic diagram illustrating an example of a superimposed image displayed when a work vehicle is traveling forward with a clamp of a bale grab facing in the direction of travel of the vehicle.
- FIG. 23: is a flowchart illustrating a procedure of a control method according to a second implementation example in an embodiment of the present disclosure.
- FIG. 24: is a schematic diagram illustrating an example of a superimposed image including an emphasis display that emphasizes an opening of a pallet.

### DESCRIPTION OF EMBODIMENTS

Meter panel units according to embodiments of the present disclosure will be described below with reference to the accompanying drawings. It should be noted that like reference signs refer to like parts throughout the several views.

The embodiments described below are exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

### <Overall configuration of work vehicle>

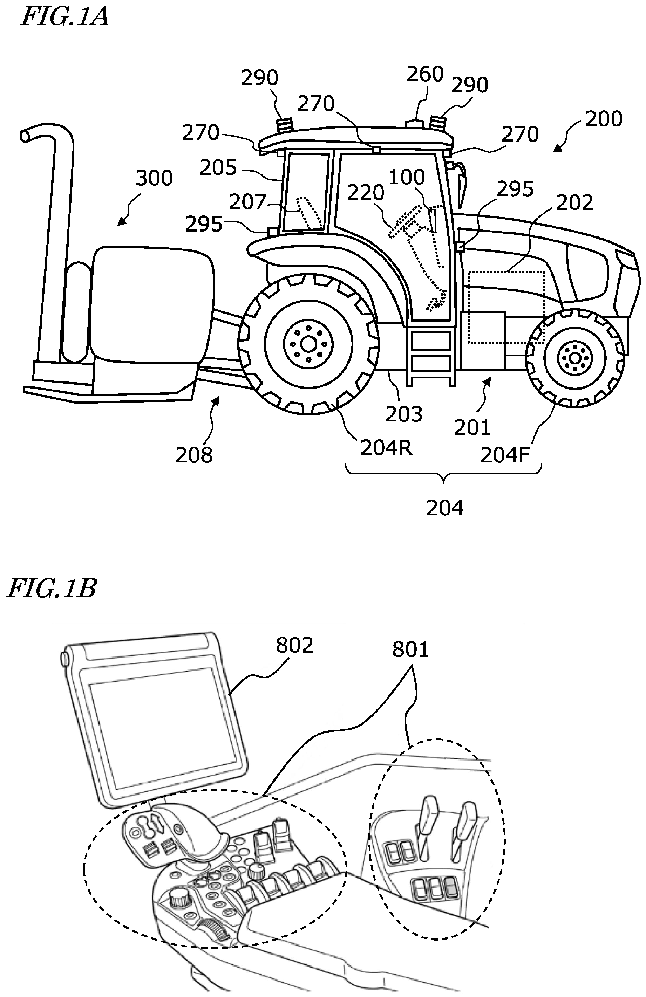

FIG. **1A** is a side view schematically illustrating an example work vehicle **200** according to this embodiment. The illustrated work vehicle **200** is a tractor that tows an implement (replaceable work equipment) **300**.

The work vehicle **200** of FIG. **1A** includes a vehicle body **201**, a prime mover (engine) **202**, and a transmission **203**. The vehicle body **201** is provided with a travel device including tire-mounted wheels **204**, and a cabin **205**. The travel device includes four wheels **204**, axles to rotate the four wheels, and brakes to slow or stop the axles. The wheels **204** of this example include a pair of front wheels **204F** and a pair of rear wheels **204R**. One or both of the front wheels **204F** and the rear wheels **204R** may be replaced by a plurality of wheels to which a continuous track is attached (crawler) instead of a tire-mounted wheel.

In the cabin **205**, a meter panel unit **100** according to an embodiment of the present disclosure, an operator's seat **207**, a steering wheel **220**, and switches for operations are provided.

FIG. **1B** is a diagram illustrating an example of a group of operation switches **801** and an operation terminal **802** provided inside the cabin **205** of the work vehicle **200**.

In the interior of the cabin, a group of operation switches **801** including a plurality of switches operable by the user is arranged. The group of operation switches **801** includes, for example, switches to select the gear stage of the main transmission or sub-transmission, a switch to switch between forward and reverse travel, and switches to operate the implement.

The operation terminal **802** is a terminal for the user to perform operations relating to the travel of the work vehicle and the operation of the implement, and is also referred to as a virtual terminal (VT). The operation terminal **802** may include a touch screen display device and/or one or more buttons. The display device may be, for example, a liquid crystal or organic light emitting diode (OLED) display.

Referring again to FIG. **1A**. The work vehicle **200** of FIG. **1A** is provided with a plurality of external sensors to sense surroundings of the work vehicle **200**. The external sensors may include various kinds of sensors such as a plurality of cameras **270**, a plurality of obstacle sensors **295**, and a plurality of LiDAR sensors **290**. The cameras **270** may, for example, be provided on the front, rear, left, and right sides of the work vehicle **200**. Each camera **270** captures an image of an environment around the work vehicle **200**, and generates image data. Images obtained by the cameras **270** may, for example, be transmitted to a terminal device for remote monitoring. The cameras **270** are optionally provided, and the number thereof is not particularly limited. The LiDAR sensor **290** is an example external sensor to output sensor data indicating a distribution of objects present in an environment around the work vehicle **200**. In the example of FIG. **1A**, two LiDAR sensors **290** are provided at an upper front portion and an upper rear portion of the cabin **205**. The LiDAR sensors **290** may be provided at other positions (e.g., a lower portion of a front surface of the vehicle body **201**). Each LiDAR sensor **290** repeatedly outputs sensor data indicating distances to and directions of measurement points of objects existing in a surrounding environment, or the three-dimensional coordinate values of the measurement points, while the work vehicle **200** is traveling. The number of LiDAR sensors **290** is not limited to two and may be one or at least three. In the example of FIG. **1A**, the plurality of obstacle sensors **295** are provided at a front portion and a rear portion of the cabin **205**. The obstacle sensors **295** may be positioned at other positions. The obstacle sensors **295** may include a laser scanner or ultrasonic sonar, for example. The LiDAR sensors **290** and the obstacle sensors **295** may be activated, for example, when the work vehicle **200** travels in an automatic driving mode. The LiDAR sensors **290** and obstacle sensors **295** are optionally provided, and the number of each is not particularly limited. Only one of the LiDAR sensors **290** and obstacle sensors **295** may be provided in the work vehicle **200**. In cases where they are not needed, such as when the work vehicle **200** does not have an automatic driving function, the work vehicle **200** need not include the LiDAR sensors **290** and the obstacle sensors **295**.

The work vehicle **200** further includes a GNSS unit **260**. GNSS collectively refers to satellite-based positioning systems, such as the global positioning system (GPS), the quasi-zenith satellite system (QZSS, for example, Michibiki), GLONASS, Galileo, and BeiDou. The GNSS unit **260** receives satellite signals transmitted from a plurality of GNSS satellites (also referred to as GNSS signals), and performs positioning based on the satellite signals. The GNSS unit **260** is provided at an upper portion of the cabin **205**, but the GNSS unit **260** may be provided at other positions.

The engine **202** may, for example, be a diesel engine. An electric motor may be used instead of a diesel engine. The transmission **203** is capable of changing the propelling force and movement speed of the work vehicle **200** by changing gear ratios. The transmission **203** is also capable of allowing the work vehicle **200** to switch between forward movement and rearward movement.

A connecting device **208** is provided at a rear portion of the vehicle body **201**. The connecting device **208** includes, for example, a three-point support device (also referred to as a "three-point linkage" or "three-point hitch"), a power take-off (PTO) shaft, a universal joint, and a communication cable. The connecting device **208** can be used to removably connect an implement **300** to the work vehicle **200**. The connecting device **208** can change the position or orientation of the implement **300** by raising or lowering the three-point linkage using, for example, a hydraulic device. In addition, power can be transmitted from the work vehicle **200** to the implement **300** through the universal joint. While towing the implement **300**, the work vehicle **200** allows the implement **300** to perform predetermined work. A connecting device may also be provided at a front portion of the vehicle body **201**. In that case, an implement can be connected in front of the work vehicle **200**.

Although the implement **300** of FIG. **1A** is, for example, a sprayer for spraying a chemical agent to crops, the implement **300** is not limited to sprayers. For example, any kind of implement **300** such as a mower, seeder, spreader, rake, baler, harvester, plough, harrow, or rotary tiller may be connected to the work vehicle **200** for use.

Thus, the work vehicle **200**, which is used in smart agriculture, includes various sensors, and performs various kinds of work together with the implement **300**. During such work, it is necessary to give the driver (user or operator) various kinds of information about a travel state and a work state. Therefore, information that should be displayed on the meter panel unit **100** may significantly vary depending on the kind and phase of work.

It should be noted that the work vehicle **200**, such as a tractor, may be configured to travel by manual driving, automatic steering, or automatic driving.

Another example of an implement in the present embodiment is a loader including a tip to which an attachment is detachably attached. Various attachments suited to the nature of the work are attached to the tip of the loader. The attachments are, for example, grabs such as bale grabs and silage grabs, forks such as roll forks and super pallet forks, or buckets.

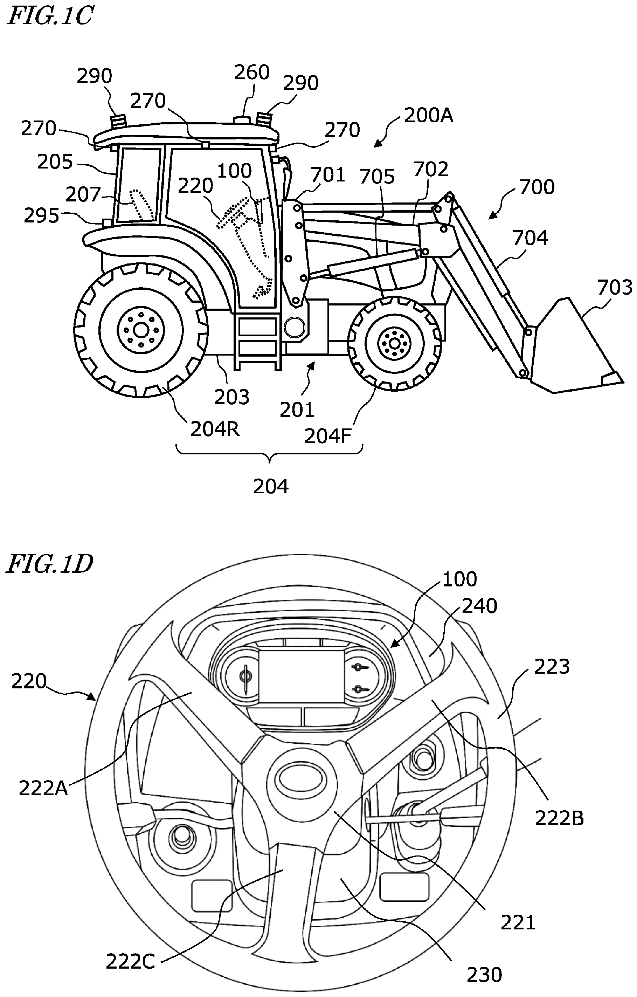

FIG. **1C** is a side view schematically illustrating an example work vehicle **200A** according to this embodiment. The illustrated work vehicle **200A** is a tractor to the front of which a front loader (hereinafter simply referred to as a "loader") **700** is connected. A bucket **703** is attached as an attachment to the tip of the loader **700**. It should be noted that the loader of the present embodiment is not limited to a front loader, and may be a loader connected to the rear of the vehicle.

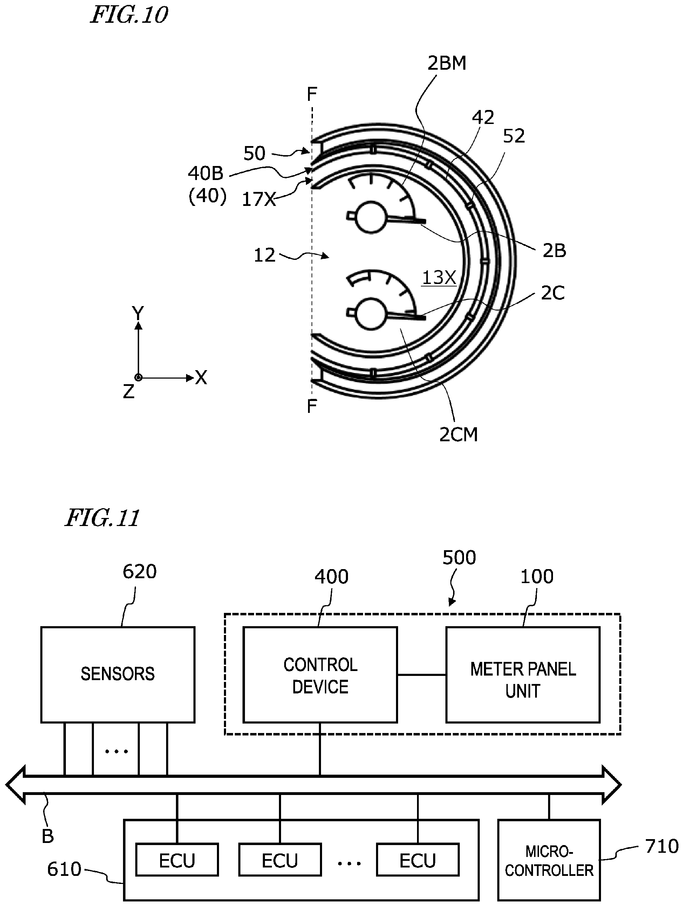

The loader **700** illustrated in FIG. **1C** includes a support frame **701**, a boom **702**, a bucket **703**, a bucket cylinder **704**, and a boom cylinder **705**. The loader **700** further includes a microcontroller **710** (see FIG. **11**) that controls the operation of the loader. The support frame **701** is fixed to the frame of the vehicle body **201**. The boom **702** has an arm-shaped structure and is rotatably supported by the support frame **701** so as to extend forward and upward of the vehicle. The bucket **703** is rotatably supported by an end portion of the boom **702**. In the present embodiment, the fulcrum (or rotational axis) that rotatably supports the boom **702** is referred to as the "boom fulcrum," and the fulcrum (or rotational axis) that rotatably supports the bucket **703** is referred to as the "bucket fulcrum."

The loader **700** in the present embodiment is connected to the vehicle body **201** via a hydraulic coupler and a power connector. The loader **700** includes a hydraulic system having hydraulic valves, and operates under hydraulic control. Specifically, by extending and retracting the boom cylinder **705** hydraulically, the boom **702** can be rotated around the rotational axis located at the boom fulcrum. This makes it possible to raise and lower the loader **700** (or bucket **703**). In addition, by extending and retracting the bucket cylinder **704** hydraulically, the bucket **703** can be rotated around the rotational axis located at the bucket fulcrum. This enables scooping and dumping operations of the bucket **703**.

The group of operation switches **801** (see FIG. **1B**) provided inside the cabin **205** may include an operation lever for performing dump and scoop operations of the bucket **703**. An operation joystick for performing dump, scoop, and lift operations of the bucket **703** may be provided inside the cabin **205**. In addition, the operation terminal **802** may display a setting screen for the hydraulic control valve of the loader, including a button display for adjusting the flow rate of hydraulic fluid. The operation lever, joystick, and operation terminal **802** are electrically connected to the microcontroller of the loader. The user can perform desired work while operating the boom **702** and bucket **703** by operating the operation lever, joystick, and the setting screen of the operation terminal **802**.

### <Overall configuration of meter panel unit>

FIG. **1D** is a front view schematically illustrating the meter panel unit **100** when the meter panel unit **100** is attached to a tractor, which is an example work vehicle, in an embodiment of the present disclosure. In the example illustrated in FIG. **1D**, the meter panel unit **100** is positioned on the front side of the operator's seat of the tractor. Specifically, the meter panel unit **100** is positioned above a steering column (steering wheel stay) **230** that supports the steering wheel **220** in a manner that allows the steering wheel **220** to rotate, and is fitted into an opening of a meter cover **240**. In this example, the steering wheel **220** has a central hub (horn cover) **221**, three spokes **222A**, **222B**, and **222C** radially extending from the horn cover **221**, and a rim **223** supported by the spokes **222A**, **222B**, and **222C**. The meter panel unit **100** is provided at a position that allows the operator sitting on the operator's seat to see the meter panel unit **100**. In the example of FIG. **1D**, various kinds of information displayed on the meter panel unit **100** can be seen through an opening between the spokes **222A** and **222B**.

The meter panel unit **100** is required to have excellent visibility. In particular, in the case of movable work vehicles capable of performing automatic steering or automatic driving, various kinds of information that are not displayed on general passenger cars need to be displayed during various kinds of agricultural work. For the meter panel unit **100**, having such a feature, the visibility is preferably improved so as to avoid overlooking more important information of various kinds of information. In addition, in the case in which the meter panel unit **100** is mounted on various work vehicles, it is desirable that the meter panel unit **100** have a structure that allows easy attachment. As described below, the meter panel unit **100** of this embodiment has excellent visibility and is easy to attach.

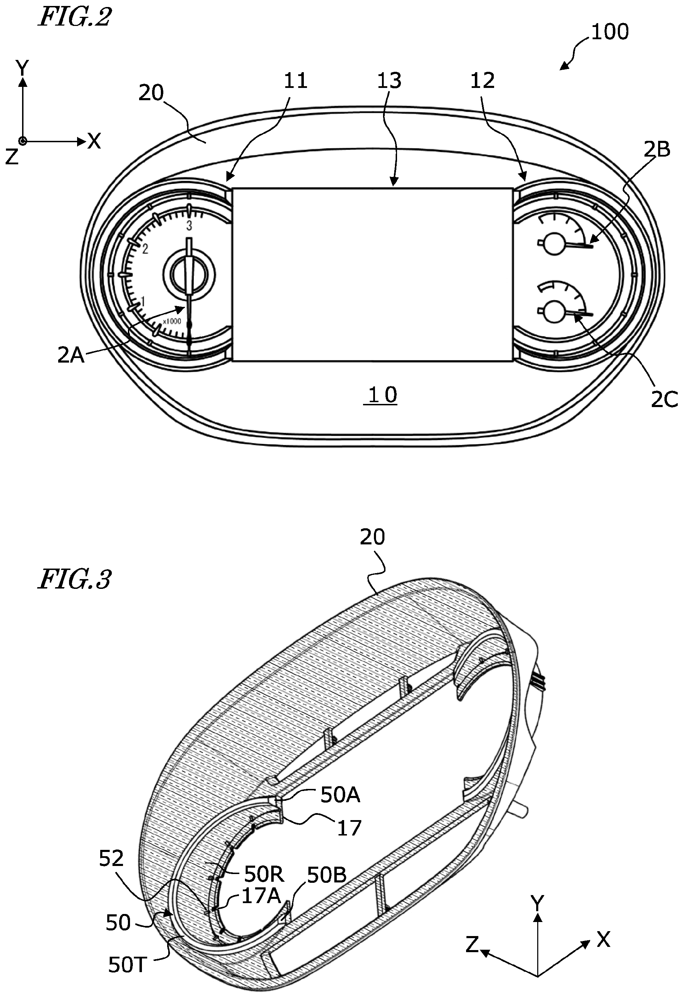

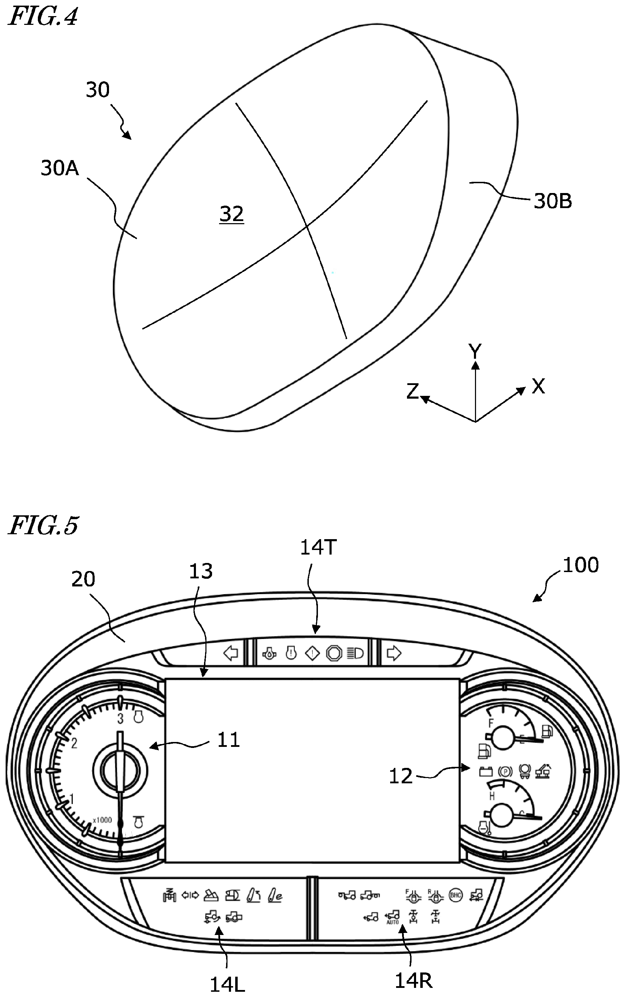

An overall configuration of the meter panel unit **100** will be described below with reference to FIGS. **2**, **3**, and **4**. FIG. **2** is a front view illustrating an example arrangement of main components of the meter panel unit **100** of this embodiment. FIG. **3** is a perspective view illustrating an example configuration of a wall surface portion described below of the meter panel unit **100**. FIG. **4** is a perspective view illustrating an example configuration of a transparent cover described below of the meter panel unit **100**. These drawings illustrate an X-axis, a Y-axis, and a Z-axis that are orthogonal to one another for reference (right-handed coordinate system). In the present description, the positive direction of the Y axis is also referred to as "upward," and the negative direction thereof is also referred to as "downward." The positive direction of the X axis is also referred to as "rightward," and the negative direction thereof is also referred to as "leftward." The positive direction of the Z axis is also referred to as "forward," and the negative direction thereof is also referred to as "backward."

As illustrated in FIG. **2**, the meter panel unit **100** includes a meter portion **10** including a first analog meter **11**, a second analog meter **12**, and a display element (i.e., digital display) **13** provided between the first and second analog meters **11** and **12**. In the present description, a portion of the meter portion **10** of FIG. **2** that displays information is also referred to as a display surface side of the meter portion **10**.

The first analog meter **11** includes a pointer **2A**, and the second analog meter **12** includes pointers **2B** and **2C**. The pointer **2A** is supported in a manner that allows the pointer **2A** to rotate around a rotation axis positioned near the center of the first analog meter **11**. The pointer **2A** indicates the engine speed by the direction in which the tip of the pointer **2A** is oriented, for example. Here, "engine speed" means the number of revolutions of the engine per unit time (for example, one minute). The pointers **2B** and **2C** are supported in a manner that allows the pointers **2B** and **2C** to rotate around the respective axes of rotation located at different positions of the second analog meter **12**. The pointer **2B** indicates the remaining amount of fuel by the direction in which the tip of the pointer **2B** is oriented. The pointer **2C** indicates the temperature (water temperature) of engine-cooling water by the direction in which the tip of the pointer **2C** is oriented, for example. The pointers **2A**, **2B**, and **2C** are driven by a drive part (movement) included in the meter portion **10**. The drive part receives an electrical signal indicating a sensor output such as the engine speed, the remaining amount of fuel, or the water temperature, and converts the electrical signal into mechanical movements for changing the orientations of the pointers **2A**, **2B**, and **2C**. The drive part for each pointer **2A**, **2B**, **2C** includes an actuator such as a stepping motor.

The display element **13** is a digital meter rather than an analog meter. The display element **13** is, for example, an active matrix display, such as a liquid crystal display panel or an organic light emitting diode (OLED). In the following description, as an example, it is assumed that the display element **13** is a liquid crystal display (LCD). The display element **13** includes a large number of pixels two-dimensionally arranged in a display region, and provides display visible to the human eye by emitting light from the large number of pixels. In this embodiment, each pixel of the display element **13** includes R, G, and B subpixels, and therefore, the display element **13** is capable of displaying color images. Unlike analog meters, the display element **13** is capable of displaying numerals, letters, graphics, icons, symbols, still images, or moving images having any appropriate sizes at any appropriate positions in the display region. Strictly speaking, numerals, letters, graphics, icons, and symbols are a part of images (still images or moving images) displayed in the display region by the display element **13**. The display element **13** is also capable of apparently displaying an image similar to all or a portion of an analog meter having a pointer. In the case in which the display element **13** displays an image of an "analog meter," a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of a motor output, the state of charge of the battery, and the temperature of the battery, respectively.

The "analog meter" displayed by a display device such as the display element **13** is different from the first analog meter **11** and the second analog meter **12** in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion **10**, particularly information with high importance and requiring high visibility, is displayed using an analog meter having a three-dimensional structure.

An external shape of the meter portion **10** when the meter portion **10** is viewed from the front of the display surface side is a closed loop similar to an ellipse. The external shape of the meter portion **10** is not limited to such an example. The external shape of the meter portion **10** when the meter portion **10** is viewed from the front may have generally a rectangular shape, or a shape that is a combination of a straight line and a curved line.

The meter panel unit **100** further includes a wall surface portion **20** fixed to the display surface side of the meter portion **10**, and a transparent cover **30** opposite the display surface of the meter portion **10**.

The wall surface portion **20** surrounds the first analog meter **11**, the display element **13**, and the second analog meter **12** entirely along the peripheral edge of the meter portion **10**. The wall surface portion **20** may, for example, be formed of a plastic (synthetic resin). The wall surface portion **20** protrudes vertically (the positive direction of the Z axis) from the display surface of the meter portion **10**. The wall surface portion **20** does not necessarily need to be perpendicular to the display surface of the meter portion **10**, and may be tilted from the Z axis. In the present disclosure, the distance between the display surface of the meter portion **10** and an end on the front side of the wall surface portion **20** is referred to as a "height" of the wall surface portion **20**. In this embodiment, the height of the wall surface portion **20** is not uniform along the peripheral edge of the meter portion **10**, and may vary depending on the position on the peripheral edge.

As illustrated in FIG. **4**, the transparent cover **30** includes a front surface section **30A** including a concave surface **32**, and a side surface section **30B** extending from the peripheral edge of the front surface section **30A** along the outer side of the wall surface portion **20**. The side surface section **30B** of the transparent cover **30** can cover the outer side of the wall surface portion **20** along all the periphery thereof. The transparent cover **30** may, for example, be made of a colorless, transparent plastic (e.g., acrylic resin), or glass. In this embodiment, the front surface section **30A** and the side surface section **30B** of the transparent cover **30** are integrally formed together.

When the transparent cover **30** is viewed from the direction of the normal to the meter portion **10** with the meter panel unit **100** attached to the work vehicle, the front surface section **30A** of the transparent cover **30** is preferably tilted forward toward the operator. In the case in which the front surface section **30A** is tilted forward, when the operator sees the meter portion **10** through the transparent cover **30**, the operator's face and the background behind the operator are less likely to be reflected on the transparent cover **30**.

Next, an indicator region of the meter portion **10** will be described with reference to FIG. **5**. In the example of FIG. **5**, the meter portion **10** includes an indicator region **14T** provided above the display element **13**, and indicator regions **14L** and **14R** provided below the display element **13**. Various indicators are provided in each of the indicator regions **14T**, **14L**, and **14R**. Each indicator presents predetermined information such as warning when a light emitting device such as a light emitting diode (LED) behind the indicator is on.

It should be noted that in this embodiment, two indicator regions **14L** and **14R** that are divided left and right are arranged below the display element **13**, but one indicator region that integrates the two indicator regions may be arranged.

Visibility of the indicator region **14T**, which is positioned above the display element **13**, is less likely to be obstructed by the spokes **222A**, **222B**, and **222C** of the steering wheel **220**, compared to the other indicator regions **14L** and **14R**. Therefore, it is preferable that indicators for indicating particularly important information (information with a higher warning level) (e.g., indicators for indicating the on/off state of the illumination device, turn signals, and warnings to the operator) be selected from a large number of indicators and arranged in the indicator region **14T**. The "warning level" of information displayed by an indicator may, for example, be specified in the manual of the work vehicle. For example, information such as the abnormality or failure of the engine and the on/off state of the headlamp has a higher warning level.

In this embodiment, each indicator arranged in the indicator region is composed of a light transmission region having a shape that defines a characteristic graphic (including icons and/or letters) and a light emitting device arranged behind the light transmission region. The indicator may be turned on/off by the light emitting device behind the indicator being turned on/off. One or two light emitting devices are arranged behind each indicator, for example.

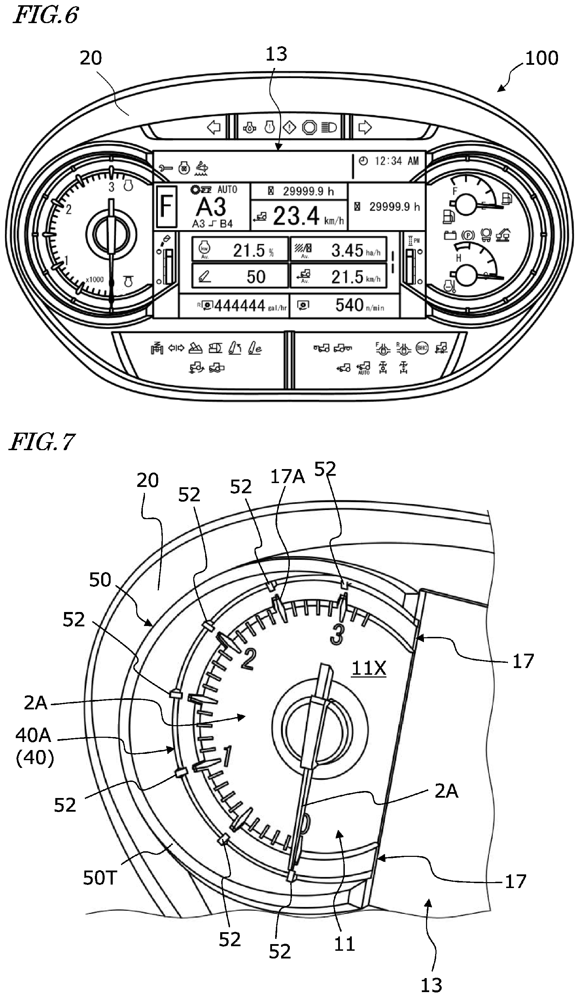

Next, an example display of the display element **13** will be described with reference to FIG. **6**. In the example of FIG. **6**, the display region of the display element **13** is divided into several regions as described below. In each region, an "image" showing information such as the gear ratio, vehicle speed, various functional performance information, or hour meter is displayed. The images include various kinds of information represented by letters, numerals, graphics, icons, symbols, and the like. Various kinds of digital images may be indicated by different colors in order to increase the visibility. In particular, when the operator's attention should be attracted, display may be performed in which at least one of the positions, sizes, or colors of letters, numerals, graphics, icons, or symbols are changed and emphasized. When such emphasized display is performed, sound or speech may be emitted from an audio device such as a loudspeaker.

### <Communication ring and facing plate>

Next, an arc-shaped indicator (C-shaped communication ring) and a facing plate will be described with reference to FIGS. **7** to **9**.

In this embodiment, the meter panel unit **100** includes a first arc-shaped indicator (communication ring) **40A** arranged around a sweep range **11X** of the pointer **2A**, and a second arc-shaped indicator **40B** (see FIG. **10**) arranged around sweep ranges of the pointers **2B** and **2C**. In the present disclosure, the term "arc" means a portion of a circle (circumference). The circle is not limited to a "perfect circle," and may include a portion whose curvature is gradually or locally changed like a portion of an ellipse.

The structure of the first arc-shaped indicator **40A** and the structure of the second arc-shaped indicator **40B** are symmetrical about a vertical line, and therefore, are collectively referred to as arc-shaped indicators **40**. The arc-shaped indicators **40** will be described below using the first arc-shaped indicator (communication ring) **40A** as an example, for the sake of simplicity.

As illustrated in FIG. **7**, the meter panel unit **100** of this embodiment includes a facing plate **50** positioned outward of the arc-shaped indicator **40**. The facing plate **50** is formed of the same material (plastic) as that for the wall surface portion **20**. As illustrated in FIG. **3**, the facing plate **50** is integral with the wall surface portion **20**. The facing plate **50** is in the shape of roughly an arc as viewed from the front. A height of an upper end **50T** of the facing plate **50** (that is, the distance from the display surface of the meter portion **10**) varies continuously from an end **50A** on the upper side to an end **50B** on the lower side, and is greatest at a middle position. The facing plate **50** is a curved wall rising from the meter portion **10**.

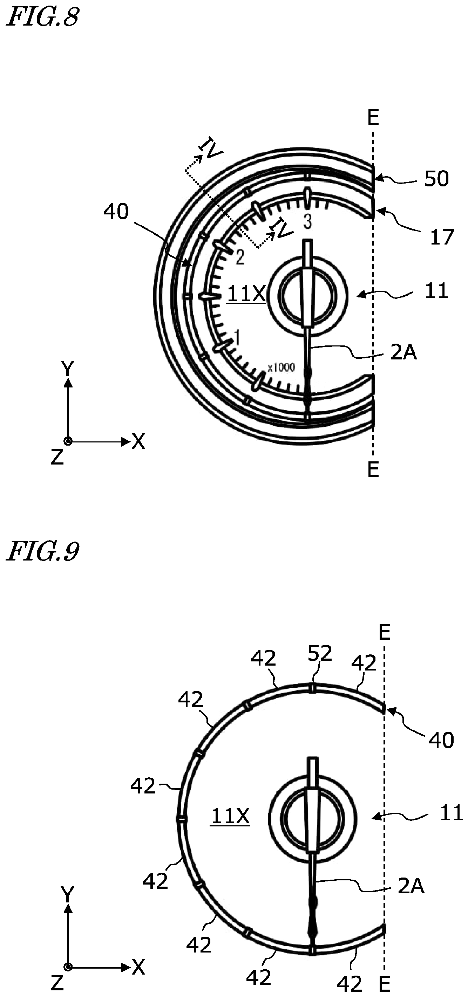

FIG. **8** is a front view illustrating a positional relationship between the first analog meter **11**, the arc-shaped indicator **40**, and the facing plate **50**. FIG. **9** is a front view mainly illustrating an example configuration of the arc-shaped indicator **40**. None of the first analog meter **11**, the arc-shaped indicator **40**, and the facing plate **50** extends rightward (the positive direction of the X axis) beyond a dashed line E-E of FIG. **8**. The display element **13** is arranged rightward (in the positive direction of the X axis) of the dashed line E-E.

With such a configuration, while the length of the pointer **2A**, or the radius of the first analog meter **11**, is increased, an increase in the size in the horizontal direction (X-axis direction) of the first analog meter **11** can be reduced. This also holds true for the second analog meter **12**. It should be noted that as illustrated in FIG. **1D**, when the size in the horizontal direction of the meter portion **10** is increased, the spokes **222A** and **222B** of the steering wheel **220** are more likely to obstruct seeing of the first and second analog meters **11** and **12**. Therefore, it is not preferable to increase the size in the horizontal direction of the meter portion **10**. In this embodiment, the analog meter is contained inside a shape surrounded by the dashed line E-E and an arc rather than a circle. Therefore, even for the meter portion **10**, which has a limited size in the horizontal direction, the size in the horizontal direction (X-axis direction) of the display element **13** can be increased while the visibility of the first and second analog meters **11** and **12** is increased. In addition, because the first and second analog meters **11** and **12** and the display element **13** are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator **40** (**40A**), which is arranged, surrounding the first analog meter **11**, be greater than 180° and smaller than 270°. If the central angle of the "arc" is at most 180°, the visibility of the first analog meter **11** decreases. If the central angle of the "arc" is at least 270°, the effect of reducing the size in the horizontal direction (X-axis direction) of the first analog meter **11** is not sufficient. This also holds true for the arc-shaped indicator **40** (**40B**) surrounding the second analog meter **12**. In terms of design properties, it is preferable that the left and right arc-shaped indicators **40A** and **40B** be positioned symmetrically about a vertical line passing through the center of the display element **13**.

The arc-shaped indicator **40** includes at least one light emitting region **42** between the sweep range **11X** of the pointer **2A** and the facing plate **50**. In the example of FIG. **9**, a plurality of light emitting regions **42** are provided. In this example, each light emitting region **42** has a fine curved shape extending along an arc. The plurality of light emitting regions **42** are arranged in a sequence of arcs to provide the arc-shaped indicator **40**. In the case in which the number of light emitting regions **42** is one, a single light emitting region **42** has an arc shape.

In the example illustrated in the figure, the first analog meter **11** includes an arc-shaped scale **17** between the arc-shaped indicator **40** and the sweep range **11X** of the pointer **2A**. The scale **17** has a three-dimensional shape protruding from the display surface (raised scale). The scale **17** is formed of a plastic integrally with the wall surface portion **20** and the facing plate **50**. It should be noted that the scale **17** does not necessarily need to have a three-dimensional shape. The scale **17** desirably has a three-dimensional shape in terms of higher visibility.

Although the plurality of light emitting regions **42** included in the arc-shaped indicator **40** may each include a light emitting element (e.g., an LED or OLED), in this embodiment the plurality of light emitting regions **42** are configured with a plurality of light transmission regions provided on the display surface of the meter portion **10** (i.e., the surface on the front side of the housing of the meter portion **10**) and at least one light emitting device arranged behind the plurality of light transmission regions.

The plurality of light emitting devices may include a plurality of LEDs that emit different colors. In this embodiment, the plurality of light emitting devices include an LED that emits red light, an LED that emits green light, and an LED that emits blue light. By causing these LEDs to selectively emit light, the arc-shaped indicator **40** can exhibit the function of notifying the operator of information using light having various colors. For example, all of the light emitting regions **42** of FIG. **9** can selectively emit red light, green light, and blue light. Alternatively, a light emitting device may be assigned to each of the plurality of light emitting regions **42**, and the plurality of light emitting devices may be caused to emit light separately, so that light beams can be sequentially emitted from the plurality of light emitting regions **42**.

### <Raised scale>

Next, the raised scale **17** will be described. As illustrated in FIGS. **7** and **8**, the raised scale **17** extends in the shape of an arc inside the arc-shaped indicator **40** to form generally a C-shape. As illustrated in FIGS. **3** and **7**, the raised scale **17** includes a plurality of notches **17A** arranged at predetermined intervals. The notch **17A** is a portion of the raised scale **17** whose width is locally reduced. The position of the notch **17A** corresponds to the position of a scale that is to be indicated by the tip of the pointer **2A** in the first analog meter **11**. The presence of the three-dimensional notches **17A** facilitates reading of scales by the operator.

As illustrated in FIG. **7**, the facing plate **50** includes a plurality of protrusions **52** that protrude toward the sweep range **11X** of the pointer **2A**. The plurality of protrusions **52** are provided at the positions of the notches of the raised scale **17**, or in other words, positions aligned with the scales. Therefore, the notch **17A** of the raised scale **17** is recognized as a graphic integrated with the protrusion **52**, resulting in an improvement in the visibility of the scale. The plurality of protrusions **52** each extend across between the plurality of light emitting regions **42** of the arc-shaped indicator **40**. Therefore, the array of the plurality of light emitting regions **42** also corresponds to the array of the scales.

As can be seen from FIG. **3**, the plurality of protrusions **52** serve as a bridge that connects the raised scale **17** to the facing plate **50**. The facing plate **50** is connected to the wall surface portion **20**. In this embodiment, the wall surface portion **20**, the facing plate **50**, and the raised scale **17** are integrally formed of a resin. The plurality of protrusions **52**, which extend from the facing plate **50**, delimit a boundary portion of the plurality of light emitting regions **42** in the arc-shaped indicator **40**.

Next, the second analog meter **12** and the second arc-shaped indicator **40B** will be described with reference to FIG. **10**. The second arc-shaped indicator **40B** and the first arc-shaped indicator **40A** are symmetrical about a vertical line, and have substantially the same configuration. A facing plate (right facing plate) **50** is provided outward of the second arc-shaped indicator **40B**. The left facing plate **50** and the above facing plate (left facing plate) **50** are symmetrical about a vertical line.

Although an arc-shaped rib **17X** corresponding to the raised scale **17** is provided inside the second arc-shaped indicator **40B**, no notches are present in the arc-shaped rib **17X**. Protrusions (bridges) **52** are equally spaced and arranged between the arc-shaped rib **17X** and the right facing plate **50** so as to delimit a plurality of light emitting regions **42** included in the second arc-shaped indicator **40B**.

A sweep range **13X** of the second pointer **2B** and the third pointer **2C** is provided in a range surrounded by the second arc-shaped indicator **40B**. A rotational angle range **2BM** of the second pointer **2B** and a rotational angle range **2CM** of the third pointer **2C** have a similar or congruent outer shape. In the example of FIG. **10**, the rotational angle range **2BM** of the second pointer **2B** and the rotational angle range **2CM** of the third pointer **2C** are vertically symmetrical, but this is not limited to such an example. The rotational angle range **2BM** and the rotational angle range **2CM** may have a shape and size such that they overlap each other when one of them is translated in the vertical direction, for example.

With such a configuration, scales can be intuitively read based on the movements of the second pointer **2B** and the third pointer **2C**, and are less likely to be erroneously read.

### <Information display system>

An information display system **500** according to an embodiment of the present disclosure will be described below with reference to FIGS. **11** to **14B**. FIG. **11** is a block diagram schematically illustrating an example configuration of the information display system **500** in an embodiment of the present disclosure. The information display system **500** includes the above meter panel unit **100**, and a control device **400** that controls the meter panel unit **100**. The control device **400** may include an electronic control unit (ECU) arranged in the work vehicle. The information display system **500** may further include an audio device such as a buzzer or a speaker.

The information display system **500** is communicably connected via a bus **B** to an ECU group **610**, sensors **620**, and a microcontroller **710** of the loader included in the work vehicle. The ECU group **610** may be collectively referred to as a "vehicle control device." In the present specification, various ECUs included in the work vehicle are referred to as "vehicle ECUs," and an ECU in the control device **400** included in the information display system **500** is referred to as a "meter ECU" to distinguish between the two. Various vehicle ECUs and the meter ECU can communicate with each other according to a vehicle bus standard such as CAN (controller area network), for example. For example, one vehicle ECU among the ECU group **610** included in the work vehicle receives signals from other vehicle ECUs and sensor data output from each sensor included in the sensors **620**, and instructs the meter ECU to display warning messages as described below or to turn on/off/blink indicators according to the state of the work vehicle. The meter ECU receives instructions from the vehicle ECU and causes warning messages to be displayed in the display region or causes indicators to be turned on or off, or to blink.

In FIG. **11**, illustration of wiring other than the wiring of the bus **B** is simplified. However, for example, there may be wiring for directly transmitting signals from one or more sensors included in the sensors **620** included in the work vehicle to the control device **400**, or wiring connecting an input device described below and the control device **400**. In addition, there is power supply wiring for supplying power from a battery to each of the meter panel unit **100**, the control device **400**, the ECU group **610**, and the sensors **620** of the work vehicle.

One example of the control device **400** in the present embodiment is a computing device including at least one processor and at least one memory that stores a computer program (code) defining a control process to be executed by the processor. Another example of the control device **400** is a computing device including a hardware accelerator such as an FPGA (Field-Programmable Gate Array), ASSP (Application Specific Standard Product), or ASIC (Application-Specific Integrated Circuit) configured to execute the control process.

A "processor" in the present embodiment is a hardware electronic circuit such as a CPU (Central Processing Unit), GPU (Graphics Processing Unit), DSP (Digital Signal Processor), ISP (Image Signal Processor), or NPU (Neural Network Processing Unit). A "memory" is a hardware electronic circuit such as a ROM (Read Only Memory) or RAM (Random Access Memory). A portion of the memory may be a storage medium connected to the processor by wiring or a network. These hardware electronic circuits may be implemented by one or more integrated circuits (IC) or large-scale integrated circuits (LSI). Each functional unit or block in an electronic circuit and related components may be individually manufactured as separate integrated circuit chips, or some or all of these functional units or blocks may be combined and manufactured as a single integrated circuit chip.

A program that defines the operation of the processor is designed so that the processor executes one or more functions, operations, steps, or processes in the embodiments of the present invention.

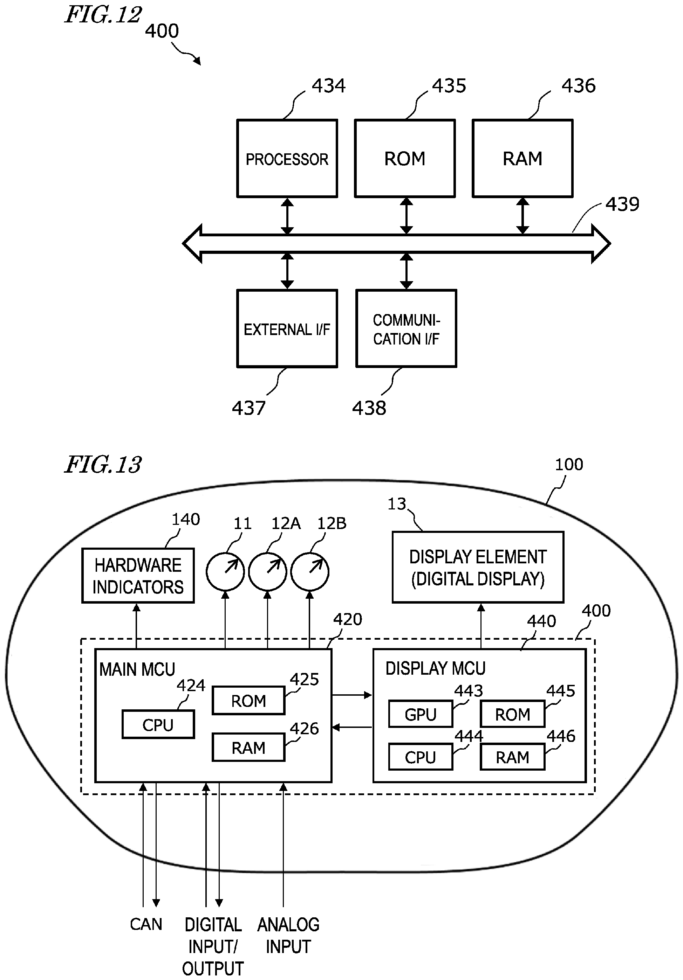

FIG. **12** is a block diagram illustrating an example hardware configuration of the control device **400**. The control device **400** includes a processor **434**, a ROM **435**, a RAM **436**, an external I/F **437**, and a communication I/F **438**. These components are interconnected via a bus **439**.

The ROM **435** is, for example, a writable memory (e.g., PROM), a rewritable memory (e.g., flash memory), or a read-only memory. The ROM **435** stores programs that control the operation of the processor. The ROM **435** does not need to be a single recording medium and may be a collection of multiple recording media. A portion of the multiple collections may be removable memory.

The RAM **436** provides a working area for temporarily expanding programs stored in the ROM **435** at boot time. The RAM **436** does not need to be a single recording medium and may be a collection of multiple recording media.

The external I/F **437** is an interface to connect the meter panel unit **100** to external devices. Examples of the external I/F **437** include a universal serial bus (USB) interface and digital or analog video interfaces.

The communication I/F **438** is an interface to perform communication between the control device **400** and other electronic components or ECUs. For example, the communication I/F **438** can perform wired communication in accordance with various protocols such as CAN or Ethernet^{®}. The communication I/F **438** may perform wireless communication in accordance with Bluetooth^{®} standards and/or Wi-Fi^{®} standards. Both standards include wireless communication standards using frequencies in the 2.4 GHz band.

The control device **400** may further include a storage device. The storage device may be, for example, a semiconductor memory, a magnetic storage device, or an optical storage device, or a combination thereof.

The ECU group **610** included in the work vehicle includes, for example, an ECU for speed control, an ECU for steering control, and an ECU for implement control. When the work vehicle (e.g., tractor) is configured to travel by automatic driving, the ECU group **610** may further include an ECU for automatic driving control. The ECU for automatic driving control performs calculations and control for realizing automatic driving based on data output from various sensors mounted on the vehicle body.

The sensors **620** may include, for example, a temperature sensor, an illuminance sensor, a fuel sensor, a water temperature sensor, an oil level gauge, an engine rotation sensor, a vehicle speed sensor, a battery voltage sensor, a shuttle sensor, a hand accelerator sensor, an accelerator pedal sensor, a main transmission lever sensor, a sub-transmission lever sensor, a seat belt sensor, a PM sensor, an acceleration sensor, an angular velocity sensor, an inertial measurement unit (IMU), a geomagnetic sensor, an imaging device, a LiDAR sensor, an ultrasonic sensor, an obstacle contact sensor, and a global navigation satellite system (GNSS) receiver.

The control device **400** of the information display system **500** may be an integrated circuit device mounted on a substrate inside the meter panel unit **100**, or may be an external integrated circuit device externally attached to the meter panel unit **100**. Furthermore, some or all of the functions of the control device **400** may be realized by one or more vehicle ECUs. Alternatively, some or all of the functions of the control device **400** may be realized by one or more servers (computers) connected via the communication I/F **438** through a communication network. In this way, one or more vehicle ECUs and/or one or more servers may cooperate with the control device **400** to realize various functions required for the information display system **500**. In this case, the vehicle ECU and/or the server function as part of the information display system **500**.

FIG. **13** is a block diagram illustrating an example in which the control device **400** is implemented inside the meter panel unit **100**. In this example, the control device **400** includes two microcontroller units (MCUs). The two MCUs are a main MCU **420** and a display MCU **440**. The main MCU **420** is a controller that controls the overall operation of the meter panel unit **100**. The main MCU **420** may also be referred to as a "main controller." The display MCU **440** is a controller that controls rendering on the display element **13** (i.e., digital display) such as an LCD. The display MCU **440** may also be referred to as a "display controller" or "LCD MCU."

The main MCU **420** includes components such as a CPU **424**, a ROM **425**, and a RAM **426**, for example. The main MCU **420** controls hardware indicators **140**, the first analog meter **11**, the second analog meter **12** (in this embodiment, two analog meters **12A** and **12B**), and the display MCU **440**. The hardware indicators **140** includes the arc-shaped indicator **40** and a plurality of light emitting devices such as LEDs behind the indicator regions **14T**, **14L**, and **14R** illustrated in FIG. **5**. The ROM **425** is a non-volatile memory that stores software (programs and various data used in processing) to be executed by the CPU **424**. The main MCU **420** controls the overall operation of the meter panel unit **100** by the CPU **424** executing the software. The main MCU **420** may include an interface to communicate with one or more vehicle ECUs connected to the meter panel unit **100** via an in-vehicle network such as CAN. The main MCU **420** may also include an external interface that enables input and output of digital signals to and from devices directly connected to the meter panel unit **100**. The main MCU **420** may further include an analog interface to which analog signals such as the voltage of the external battery are input.

The display MCU **440** includes components such as a CPU **444**, a GPU **443**, a ROM **445**, and a RAM **446**, for example. The ROM **445** is a non-volatile memory that stores software to be executed by the CPU **444** and the GPU **443**. The display MCU **440** controls rendering on the display element **13** (i.e., digital display) by the CPU **444** and GPU **443** executing the software.

In the example illustrated in FIG. **13**, the display MCU **440** dedicated to image processing is provided separately from the main MCU **420**. This is to achieve relatively high-load rendering such as color camera images and 3D display on the display element **13** such as a relatively large (e.g., 10 inches or more) and high-definition LCD. Unlike the present embodiment, if the display element **13** is small or a monochrome liquid crystal display and sophisticated image processing is not required, the display MCU **440** may not be provided, and one controller (i.e., the main MCU **420**) may perform all control including rendering.

### <Information display by arc-shaped indicator and display element>

In the information display system **500** of this embodiment, the control device **400** is configured to cause the arc-shaped indicator **40** to display information before causing the display element **13** to display various kinds of information when the work vehicle is started. This allows information that the operator should first be aware of to be presented to the operator with higher priority at startup. Such information has information indicating a state (a state classified as abnormality in traveling or working) of the work vehicle. The control device **400** is also configured to change the color of emitted light according to contents of information. For example, the control device **400** may be configured to emit blue light from the arc-shaped indicator **40** when an abnormality does not arise during starting, and to emit red light indicating an abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or red, and may be green.

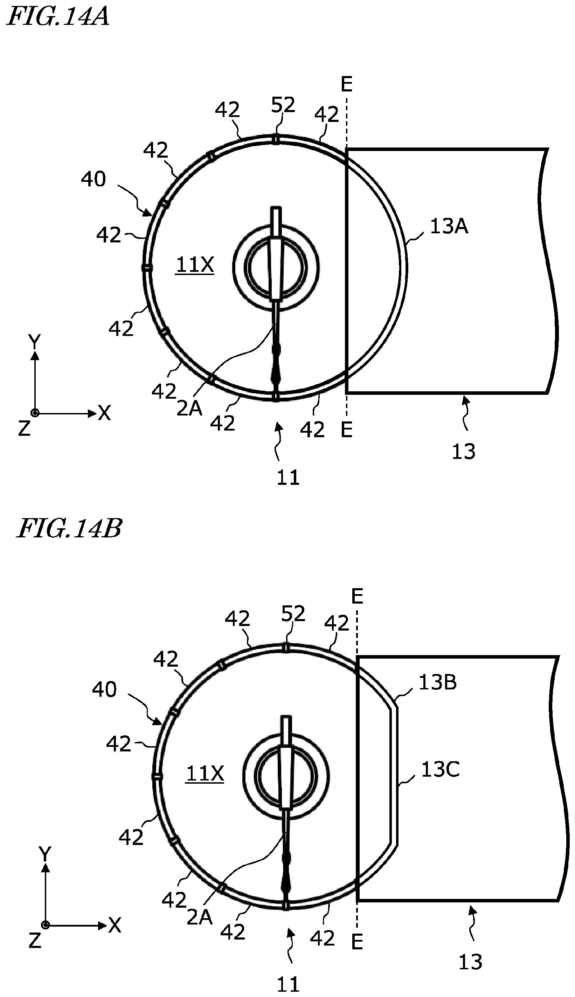

Furthermore, in this embodiment, the control device **400** is configured to cause the display element **13** to display a curved line-shaped image positioned on an extension of the arc. FIG. **14A** is a front view schematically illustrating an example in which an arc **13A** having the same color as that of light emitted from the light emitting region **42** of the arc-shaped indicator **40** is displayed. In FIG. **14A**, as an example, an arc **13A** having the same center as that of the arc of the arc-shaped indicator **40** is displayed. FIG. **14B** is a front view schematically illustrating an example in which an arc **13B** having the same color as that of light emitted from the light emitting region **42** of the arc-shaped indicator **40**, and another object **13C** having an arc with the same color, are displayed. In the example of FIG. **14B**, the object **13C** is a straight line portion. The control device **400** causes the display element **13** to display the concentric arc **13B** with the arc of the light emitting region **42**, and the straight line portion connected to the arc **13B**. The straight line portion extends in parallel with a straight line forming the boundary between the first analog meter **11** and the display element **14** (corresponding to a dashed line E-E of FIG. **14B**). By providing such display, a portion of the circle surrounding the first analog meter **11** that is cut away by the dashed line E-E is seen as a portion of the first analog meter **11** by the operator, and therefore, the operator can feel that the first analog meter **11** is large. In addition, an image that is displayed as if the image were a portion of the first analog meter **11** (hereinafter referred to as a "ring-complement image") may be partially hidden by information such as numerals or letters displayed on the display element **13**. Similarly to the shaped object **13C**, the portion of the arc **13B** may include a straight line shape. By including a straight line shape in the portion displayed on the display element **13**, a sharp design can be achieved.

The control device **400** can cause the display element **13** to display various images, which are not limited to the examples of FIGS. **14A** and **14B**, in association with light emitted from the light emitting region **42** of the arc-shaped indicator **40**. The control device **400** can also cause the display element **13** to display various images in synchronization with the flickering of the light emitting region **42** of the arc-shaped indicator **40**. What is conveyed by the display of the arc-shaped indicator **40** to notify the operator can be more easily understood by the operator by emphasizing that display and the display of the display element **13** or associating these displays with each other.

### <Example of display and operation of display element>

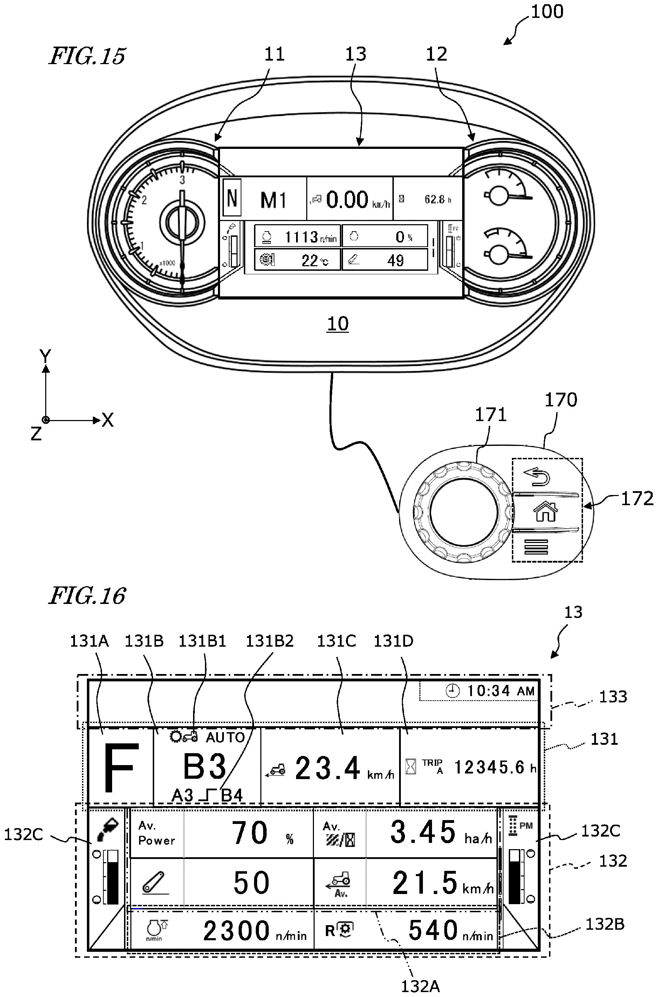

After startup of the meter panel unit **100**, a home screen is displayed in the display region of the display element **13**. FIG. **15** is a diagram illustrating an example of a home screen. Starting from the home screen, the user can perform operations to change the display of content on the display region or select various setting items using an input device described below.

In the example illustrated in FIG. **15**, an input device **170** that enables interactive operations by the user is connected to the meter panel unit **100** via a communication cable. The input device **170** has, for example, a selector switch **171** such as a jog dial and an operation switch **172**. The input device **170** may be connected to the meter panel unit **100** wirelessly or by wire. Any device that accepts user operations can be used as the input device **170**. The input device **170** may be, for example, a rotary switch, a slide switch, a push button switch, a touch screen, a joystick, or a combination of two or more thereof.

The display element **13** includes a display region in which various images showing information about the work vehicle are displayed. Information about the work vehicle includes, for example, information related to an internal combustion engine (engine), the vehicle body, a PTO shaft, hydraulics/three-point hitch, and electrical equipment provided in the vehicle body. This information is information indicating the internal state of the vehicle system. Information related to the vehicle body includes, for example, information about the direction of travel of the vehicle, clutch, transmission, brakes, headland control, and cruise control. Furthermore, various content including, for example, camera images, radio setting screens, and audio setting screens may be displayed in the display region of the display element **13**.

### <Segmentation of display region>

Next, segmentation of the display region will be described with reference to FIG. **16**. FIG. **16** is a diagram schematically illustrating an example of segmentation of the display region. The display region of the display element **13** is divided into multiple blocks. In other words, the display region of the display element **13** has multiple regions. The multiple regions in the example illustrated in FIG. **16** include a primary region **131**, a sub-region **132**, and an LCD indicator region **133**. The primary region **131** in FIG. **16** is a region surrounded by a dotted line in the display region of the display element **13**. The sub-region **132** is a region surrounded by a dashed line in the display region of the display element **13**. The LCD indicator region **133** is a region surrounded by a dash-dot line in the display region of the display element **13**. These three regions do not overlap with each other. It should be noted that the dashed lines, dotted lines, and dash-dot lines in FIG. **16** are partially overlapping for clarity.

The primary region **131** is a region to display images in the foreground (or front). The primary region **131** in the example illustrated in FIG. **16** is a rectangular region (or panel-shaped region). However, the external shape of the primary region **131** may be, for example, an ellipse or a figure that is a combination of straight lines and curved lines. A primary image showing more important information (hereinafter referred to as "primary information") among information about the work vehicle is displayed in the primary region **131**. The primary information is information that the user should know with priority, and includes, for example, information indicating the direction of travel of the work vehicle, transmission state, and vehicle speed (hereinafter referred to as "vehicle speed").

The primary information indicated by the primary image displayed in the primary region **131** in this way is displayed in the foreground of the display region. As illustrated in FIG. **15**, the primary image is displayed in front of the ring-complement image. In this way, the primary image can appropriately convey primary information to the user without being hidden by other images or content. Therefore, the visibility of primary information with particularly high importance among various information is improved, and overlooking of primary information is reduced.

In the example illustrated in FIG. **16**, the primary region **131** has a belt-shaped configuration extending in the horizontal direction. Multiple types of information about the travel state of the work vehicle are displayed in the primary region **131**. The primary region **131** is divided into multiple regions. In the example of FIG. **16**, the primary region **131** is divided into a first region **131A**, a second region **131B**, a third region **131C**, and a fourth region **131D** arranged horizontally.

The first region **131A** positioned at the left end displays the state of the shuttle lever of the work vehicle, that is, the direction of travel. The first region **131A** displays, for example, information indicating whether the shuttle lever is in a forward (F), neutral (N), or reverse (R) state.

The second region **131B** positioned second from the left displays information about the transmission state, for example, setting of the gear stage of the work vehicle. In the example of FIG. **16**, the current settings of the main transmission and sub-transmission are displayed as "B3" symbols in the second region **131B**. "B" indicates the setting stage of the sub-transmission, and "3" indicates the setting stage of the main transmission. The second region **131B** may display an icon **131B1** indicating that it is in automatic transmission mode and a range **131B2** of gear stages in the automatic transmission mode, as illustrated in FIG. **16**.

The third region **131C** displays vehicle speed information. The control device **400** switches and displays vehicle speed information in kilometer units or mile units according to, for example, commands from the vehicle ECU.

The fourth region **131D** at the right end displays information other than the direction of travel, transmission state, and vehicle speed. In the example of FIG. **16**, the fourth region **131D** displays the measured value of the hour meter, that is, the operating time of the work vehicle up to now. The fourth region **131D** may display other information, not limited to the measured value of the hour meter. For example, various information such as the upper limit setting value of engine speed or the target value of engine speed recorded in memory may be displayed in the fourth region **131D**. The control device **400** may be configured to dynamically change the display of the fourth region **131D** according to, for example, commands from the vehicle ECU. The fourth region **131D**, together with a region **132B** described below, dynamically displays the performance of travel and work of the work vehicle. Therefore, the fourth region **131D** is sometimes referred to as a "dynamic performance monitor region."

The sub-region **132** is positioned below the primary region **131**. Various content is displayed in the sub-region **132**. The sub-region **132** in the example illustrated in FIG. **16** is a rectangular region and is further divided into three types of regions. The sub-region **132** includes a performance monitor region **132A**, a dynamic performance monitor region **132B**, and two gauge regions **132C**.

The performance monitor region **132A** is the largest region among the three regions included in the sub-region **132** and is positioned toward the upper side of the sub-region **132**. The performance monitor region **132A** is sometimes referred to as the "upper region" in the sub-region **132**. The performance monitor region **132A** mainly displays one or more items selected by the user (hereinafter referred to as "selected items") from among various items showing various functional performance information. Examples of items that can be selected by the user include information about engine speed, engine speed upper limit setting value, engine speed memory value, fuel consumption, fuel efficiency, travel distance, load factor, PTO shaft rotation speed, slip rate, diesel particulate filter (DPF) regeneration, and work area.

The screen of selected items may include multiple pages that can be advanced or returned by the user operating the input device. FIG. **16** shows an example of multiple selected items displayed on one page among multiple pages. In the example illustrated in FIG. **16**, four selected items are displayed on one page. However, the number of selected items displayed on one page is not limited to four and may be, for example, two, three, or five or more.

The dynamic performance monitor region **132B** is positioned toward the lower side of the sub-region **132**. The dynamic performance monitor region **132B** is sometimes referred to as the "lower region" in the sub-region **132**. Various items showing the various functional performance information described above may be displayed in the dynamic performance monitor region **132B**. The display of information displayed in the dynamic performance monitor region **132B** may be controlled by the control device **400** (e.g., meter ECU) that receives commands from, for example, the vehicle ECU. The control device **400** may be configured to change the display of the dynamic performance monitor region **132B** in response to commands from the vehicle ECU. As illustrated in FIG. **16**, for example, two items may be displayed in the dynamic performance monitor region **132B**. However, the number of items is not limited to two. Nothing may be displayed in the dynamic performance monitor region **132B** as illustrated in FIG. **15**.

The gauge regions **132C** are positioned on the right and left sides of the sub-region **132**. The performance monitor region **132A** and the dynamic performance monitor region **132B** are positioned between the two gauge regions **132C** on the right and left. Gauge images including icons and scales may be displayed in each of the gauge regions **132C** on the right and left sides. Examples of gauge images include information about the remaining amount of diesel exhaust fluid (DEF), particulate matter (PM) accumulation, and tire air pressure.

The images displayed in the performance monitor region **132A** and the dynamic performance monitor region **132B** may be changed according to user operations using the input device. For example, camera images, images for radio or audio settings, images for front loader control, images for cylinder flow control, images for setting operation members, images for steering assist control, images for automatic steering control, images for attachment work machine control, or launcher images displaying a list of functional items may be displayed in a region corresponding to the entire performance monitor region **132A** and dynamic performance monitor region **132B**. By integrating two or more regions and using them as one region in this way, images and content can be displayed relatively large.

The LCD indicator region **133** is positioned above the primary region **131**. The LCD indicator region **133** in the example illustrated in FIG. **16** is a rectangular region like the primary region **131** and the sub-region **132**. The LCD indicator region **133** functions as a region to display information indicating the state of the work vehicle, warning information, maintenance-related information, and the like. For example, indicators that turn on when a warning state such as brake warning or fuel remaining warning should be issued and turn off when the state is resolved may be displayed in the LCD indicator region **133**. As another example, indicators that turn on periodically to prompt the user for maintenance such as DPF regeneration or engine oil change may be displayed in the LCD indicator region **133**. As a further example, indicators to request an increase or decrease in engine speed may be displayed in the LCD indicator region **133**. In the LCD indicator region **133**, no indicators are normally displayed, and a black background is displayed. When a state requiring display of warning or maintenance information arises, the indicator corresponding to that warning or maintenance information turns on. A maximum of, for example, about 10 indicators may be displayed in the LCD indicator region **133**. Since indicators can be displayed prominently against a black background, it is possible to make it easier for the operator or user to notice the occurrence of LCD indicators.

The LCD indicator region **133** is positioned below the indicator region **14T** illustrated in FIG. **5**. The indicators arranged in the indicator region **14T** are hardware indicators that are turned on by light emitting devices such as LEDs. In contrast, the indicators displayed in the LCD indicator region **133** are turned on by drawing processing on the LCD. In this specification, hardware indicators using LEDs are referred to as "LED indicators," and indicators displayed in the LCD indicator region **133** are referred to as "LCD indicators," and the two may be distinguished.

A popup image including a message for notifying the user of the content of an abnormality or failure when, for example, an abnormality or failure of the engine or electrical equipment is detected, or a message for warning about the internal state of the vehicle system (hereinafter sometimes referred to as a "popup image") may also be displayed in the sub-region **132** illustrated in FIG. **16**. In addition, popup images including messages indicating maintenance information may also be displayed in the sub-region **132**.

### <Guide display of attachment>

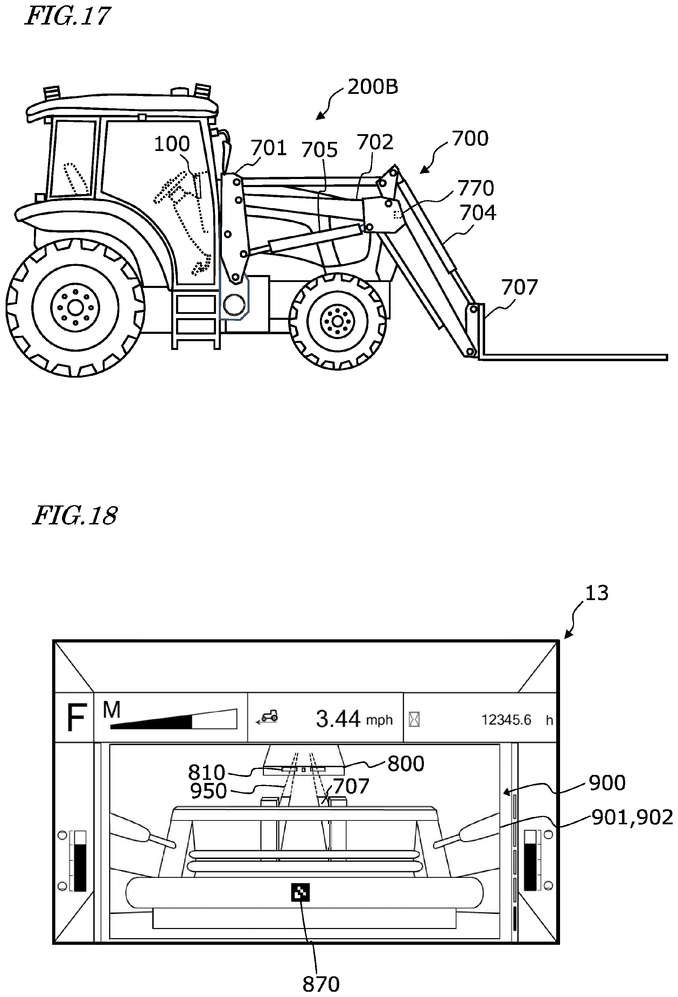

FIG. **17** is a side view schematically illustrating an example of a work vehicle **200B** to which a loader **700** having a fork **707** as an attachment is connected.

As illustrated in FIG. **1C** or FIG. **17**, in a tractor to which a loader is connected, unlike a general forklift, an attachment such as a bucket or fork attached to the tip of the loader is located at the front lower side of the bonnet of the vehicle body. Therefore, when viewed from the operator's seat, that position becomes a blind spot, and there is a problem that the attachment is difficult to see. In other words, there is a problem that the bonnet blocks the field of view of the front lower side of the bonnet, reducing visibility as viewed from the operator's seat. The reduction in visibility from the operator's seat may cause human error in visual confirmation by the user, or may hinder loader operation.

Such a problem can be resolved by the information display system or guide display control method described below.

The information display system **500** of the present embodiment, in one aspect, includes a display element (i.e., digital display) **13**, a control device **400** that controls the display element **13**, and a camera **770** that acquires a camera image including at least a portion of the implement. The information display system **500** is suitably used for a work vehicle to which an implement is connected.

The control device **400** is configured to cause the display element **13** to display a superimposed image obtained by superimposing, on the camera image, a guide image determined from among the plurality of guide images in accordance with the type of the implement connected to the work vehicle. It should be noted that, for example, a vehicle control device or a server may perform some or all of the functions of the control device **400**.

The information display system **500** may further include a storage device that stores data of a plurality of guide images that differ depending on a type of the implement. The storage device is, for example, a storage device that the control device **400** may have, the ROM **435**, or a memory that the vehicle control device has.

Taking as an example a loader to which an attachment is detachably attached, the future trajectory (i.e., predicted trajectory) of the attachment in the direction of travel of the work vehicle differs depending on the type of the attachment. For this reason, each of the plurality of guide images in the present embodiment includes a guide display representing the predicted trajectory of the implement in the direction of travel, the predicted trajectory being predicted in accordance with the type of the implement connected to the work vehicle. Accordingly, the guide image superimposed on the camera image differs depending on the type of the implement.

The camera **770** in the example of FIG. **17** is fixed to the bonnet of the vehicle body so as to face forward toward the front of the bonnet, to acquire a camera image including the tip portion of the fork **707** at a predetermined frame rate. However, the fixing position of the camera is not limited. A camera image is a video composed of time-series image data. The camera **770** is communicably connected to the control device **400** via, for example, a harness. However, one of the plurality of cameras **270** described above may function as the camera **770**.

The camera image may include at least a portion of a work target object including a load according to the attachment of the loader. The work target object is, for example, a pallet having an opening into which a fork is inserted, or a round bale. The opening of the pallet is commonly called a "fork pocket."

FIG. **18** is a schematic diagram illustrating an example of a superimposed image including a guide display, displayed on a display region of the display element **13** of a meter panel unit. A superimposed image **900** is displayed in a region corresponding to the entirety of the performance monitor region **132A** and the dynamic performance monitor region **132B** illustrated in FIG. **16**. The superimposed image **900** or camera image **901** illustrated in FIG. **18** includes a portion of a pallet **800** placed around the work vehicle, and includes an opening **810** of the pallet **800** into which the fork **707** is inserted. However, when the pallet is positioned relatively far from the work vehicle, the camera image **901** does not include the pallet **800**.

A guide image **902** includes a guide display **950** representing the predicted trajectory of the implement in the direction of travel. The predicted trajectory is predicted in accordance with the type of the implement, specifically the type of the attachment. Each of the plurality of guide images in the present embodiment includes the guide display of the attachment in a state in which the attachment is located at the lowest point that is the lower limit of the lifting range. The position and orientation of the attachment at the lowest point are fixed with respect to the camera **770**, and therefore, the guide display **950** of the attachment can be prepared in advance.

In the example of FIG. **18**, the guide display **950** includes a guide display **950** representing the predicted trajectory of the fork **707** in the direction of travel. The guide display **950** may be drawn by a dashed line extending on an extension line of the fork **707** as illustrated. However, the guide display **950** is not limited to a guideline shown by a dashed line, dotted line, or solid line, and is not particularly limited as long as it is a display that represents the predicted trajectory of the fork **707** and can guide the user. The guide display **950** may be, for example, a transparent display, a display in the form of a band wider than a guideline, a color display, or a combination thereof.

The control method for controlling display of the guide image including the guide display in the present embodiment is implemented on a computer.

### (First implementation example)

In the first implementation example, the attachment is a fork. The control device **400** causes the display element to display a superimposed image obtained by superimposing, on the camera image, a guide image determined from among the plurality of guide images in accordance with the type of the attachment. Each of the plurality of guide images includes a guide display representing the predicted trajectory of the attachment predicted in accordance with the type of the attachment. Furthermore, each of the plurality of guide images may include an outline display representing a portion of an outline of the attachment or the implement.

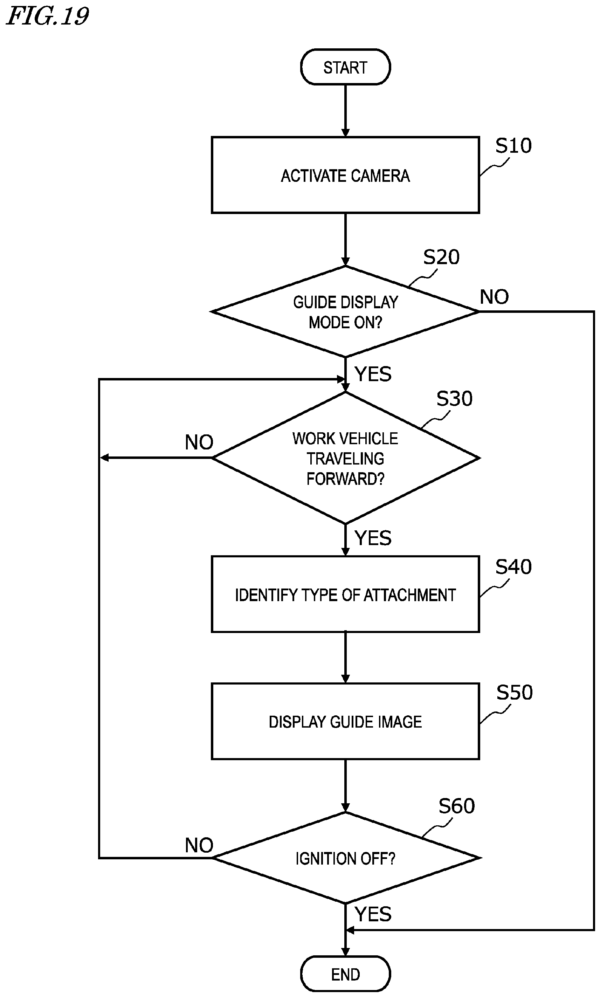

FIG. **19** is a flowchart illustrating a procedure of a control method according to the first implementation example. The procedure of the control method illustrated in FIG. **19** includes processes of steps S10 to S60.

### <Step 10>

The control device **400** activates the camera **770**. The camera **770** starts capturing images toward the front of the bonnet of the vehicle body, and acquires a camera image **901** including the tip portion of the fork **707**.

### <Step 20>

The user can switch on/off the guide display mode by operating a screen of selected items displayed in the display region of the display element **13** of the meter panel unit **100**. The guide display mode is a mode to display the superimposed image **900** including the guide display **950** on the display element **13**. When the control device **400** detects that the guide display mode is in an on state (YES in step S20), it next executes the process of step S30. When the control device **400** detects that the guide display mode is in an off state (NO in step S20), it terminates the guide display process. When the guide display mode is set to off, the control device **400** causes the camera image **901** to be displayed on the display element **13**.

### <Step 30>

The control device **400** communicates with, for example, the vehicle control device, and determines whether the work vehicle is traveling forward. When the control device **400** determines that the work vehicle is traveling forward, the control device **400** executes the process following step S40 (YES in step S30). On the other hand, when the control device **400** determines that the work vehicle is not traveling forward, such as when it is stopped or traveling in reverse, the control device **400** waits until the work vehicle travels forward (NO in step S30).

### <Step S40>

In the present embodiment, the implement has a marker encoding the type of the implement.

The marker **870** in the example of FIG. **18** is applied to the loader portion on the back side of the fork **707** so as to be captured in the camera image **901**. The marker **870** is, for example, a barcode, a two-dimensional code, or an AR (Augmented Reality) marker.

The control device **400** may identify the type of the implement by applying marker recognition to the camera image **901** including the marker **870**. In other words, the control device **400** may decode the encoded information and acquire information indicating the type of the implement. The control device **400** may cause the display element **13** to display the superimposed image **900** obtained by superimposing the guide image **902** corresponding to the identified type of the implement, from among the plurality of guide images, on the camera image **901**. In this example, the control device **400** identifies the type of the implement by marker recognition, but the control device **400** may also cause the display element **13** to display a screen including selection items for the user to select the type of the implement, and allow the user to identify the type of the implement.

### <Step S50>

The control device **400** in the present embodiment determines the guide image **902** from among the plurality of guide images based on the identified type of the attachment, and reads the determined guide image **902** from the storage device. The guide image **902** includes the guide display **950** on an extension line of the fork **707**. The guide image **902** may further include an outline display representing a portion of an outline of the fork **707**.

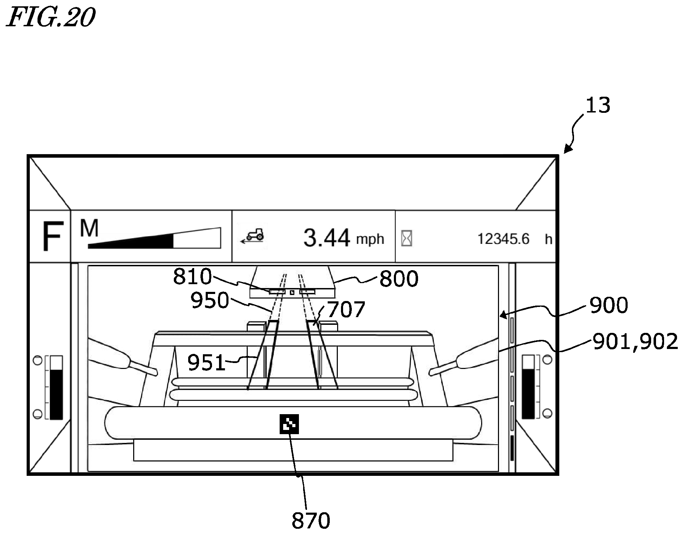

FIG. **20** is a schematic diagram illustrating an example of the guide image **902** including an outline display **951**. In the example of FIG. **20**, the guide image **902** includes a guide display **950** and an outline display **951**. The outline display **951** is drawn with a solid line that emphasizes the outline of the fork **707**. However, the outline display **951** is not particularly limited as long as it is a display representing the outline of the fork **707**. The outline display **951** may be, for example, a line such as a dashed line or dotted line, a transparent display, a display in the form of a band, a color display, or a combination thereof.

In this way, the control device **400** causes the display element **13** to display the superimposed image **900** including the guide display **950** on an extension line of the fork **707**. The guide display **950** may facilitate the alignment of the tip portion of the fork **707** with the opening **810**. In addition, the control device **400** may cause the display element **13** to display the superimposed image **900** including the guide display **950** and the outline display **951** representing a portion of the outline of the fork **707**. As described above, the decrease in visibility may make it difficult to visually confirm the tip portion of the fork **707**. By displaying the outline display **951** representing the outline of at least the tip portion of the fork **707**, the alignment of the tip portion of the fork **707** with the opening **810** may be facilitated.

The position of the attachment in the camera image changes as the loader moves up and down, that is, as the attachment moves up and down. For this reason, in the present embodiment, the control device **400** may correct the guide display in accordance with the change in the position of the attachment. As described above, each of the plurality of guide images in the present embodiment includes the guide display of the attachment in a state in which the attachment is located at the lowest point that is the lower limit of the lifting range. The control device acquires height information of the attachment relative to the lowest point, and may correct the guide display included in the guide image based on the height information. For example, the control device acquires height information of the fork **707** relative to the lowest point by regularly or periodically communicating with the vehicle control device or the microcontroller **710** of the loader. The control device **400** may correct the guide display by applying coordinate transformation (e.g., projective transformation) processing to the guide image based on the acquired height information. The control device **400** may also correct the outline display **951** based on the acquired height information. Such correction makes it possible to include in the superimposed image **900** the guide display **950** having a shape adapted to the position of the attachment.

### <Step S60>

If the ignition is in an off state (YES in step S60), the guide display process terminates. If the ignition is in an on state (NO in step S60), the process returns to the process of step S30, and the guide display process continues.

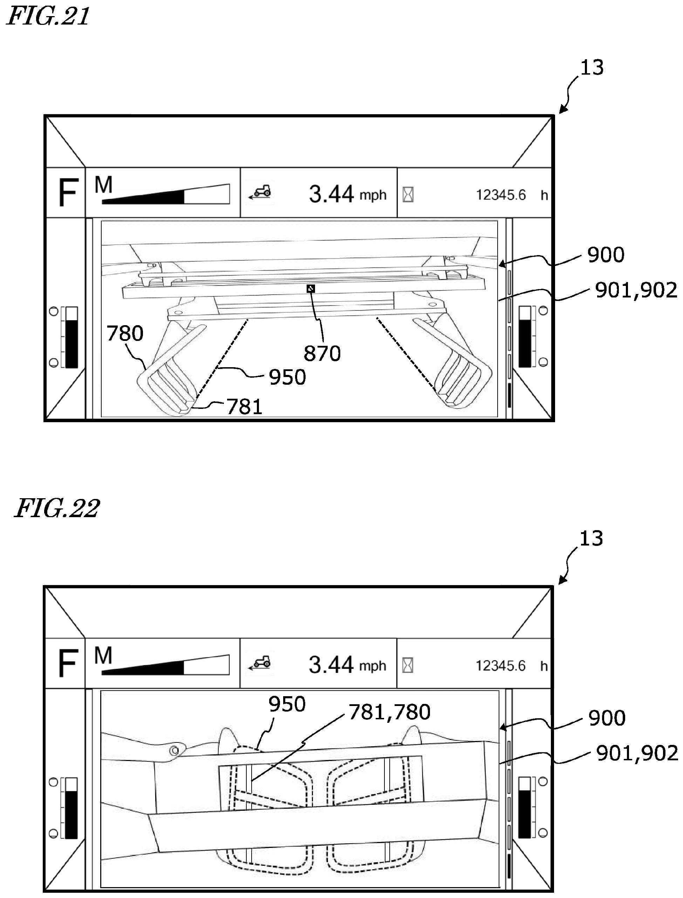

As described above, the attachment is not limited to a fork. Hereinafter, an example in which the guide display control method of the present disclosure is applied to the case in which the attachment is a bale grab will be described with reference to FIGS. **21** and **22**.

FIG. **21** is a schematic diagram illustrating an example of a superimposed image displayed when a work vehicle is traveling forward with a clamp of a bale grab facing the ground. FIG. **22** is a schematic diagram illustrating an example of a superimposed image displayed when a work vehicle is traveling forward with a clamp of a bale grab facing in the direction of travel of the vehicle.

As illustrated in FIG. **21**, when the work vehicle is traveling forward with a clamp **780** of a bale grab facing the ground, the control device **400** may cause the display element **13** to display the superimposed image **900** including the guide display **950** on an extension line of a tip portion **781** of the clamp **780**. The guide display **950** represents the predicted trajectory of the tip portion **781** in the direction of travel. The guide display **950** in the example of FIG. **21** is drawn by a dashed line.

The marker **870** in the example of FIG. **21** is applied to the attachment portion of the clamp **780** so as to be captured in the camera image **901**. The control device **400** may identify the type of the attachment as a bale grab by applying marker recognition to the camera image **901** including the marker **870**.

As illustrated in FIG. **22**, when the work vehicle is traveling forward with the clamp **780** of the bale grab facing in the direction of travel of the vehicle, the control device **400** may cause the display element **13** to display the superimposed image **900** including the guide display **950** showing the future state or trajectory in which the clamp **780** grips a round bale. In the example of FIG. **22**, the guide display **950** is drawn by a dashed line. Such a guide display may facilitate the user's operation of the bale grab. In addition, the control device **400** may acquire position information of the clamp **780** in conjunction with the operation of the clamp **780**, and correct the guide display **950** by applying coordinate transformation (e.g., projective transformation) processing to the guide image based on the acquired position information. Such correction makes it possible to include in the superimposed image **900** the guide display **950** having a shape adapted to the position or degree of opening of the clamp **780**.

### (Second implementation example)

The control device **400** in the present embodiment may perform image processing on the camera image **901** to detect a contact portion of a work target object in contact with the attachment, and cause the display element **13** to display the superimposed image **900** including an emphasis display that emphasizes the contact portion.

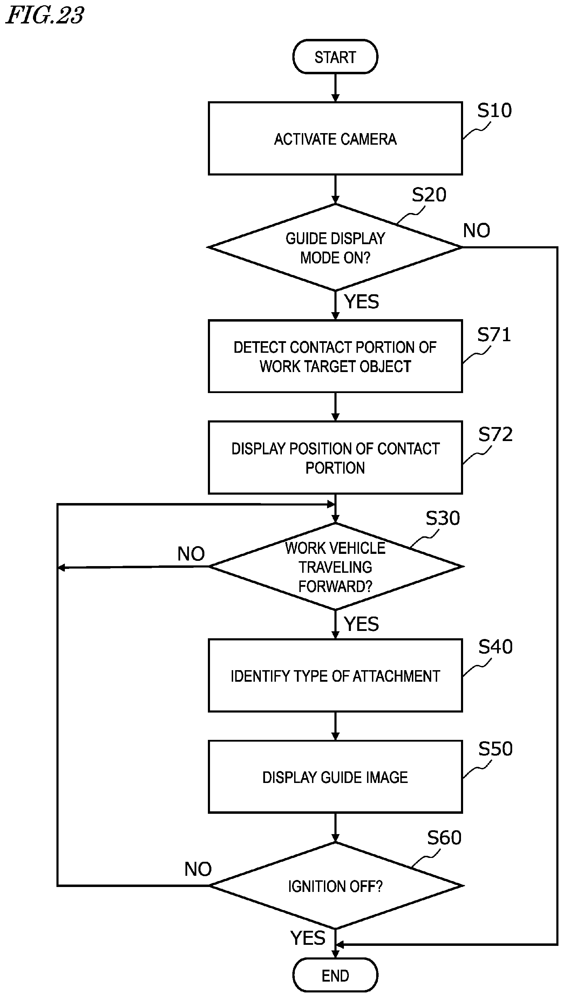

FIG. **23** is a flowchart illustrating a procedure of a control method according to the second implementation example. In the illustrated flowchart, processes substantially the same as those in the first implementation example are given the same reference signs. The procedure of the control method according to the second implementation example differs from the procedure of the control method according to the first implementation example in that it includes a process of detecting the contact portion of the work target object (step S71) and a process of displaying the position of the contact portion (step S72). The following mainly describes the points that differ from the first implementation example.

### (Steps S71, S72)

In the second implementation example, the control device **400** performs image processing on the camera image **901** to detect the opening **810** of the pallet **800** that is in contact with the fork **707**, and causes the display element **13** to display the superimposed image **900** including an emphasis display that emphasizes the opening **810**.

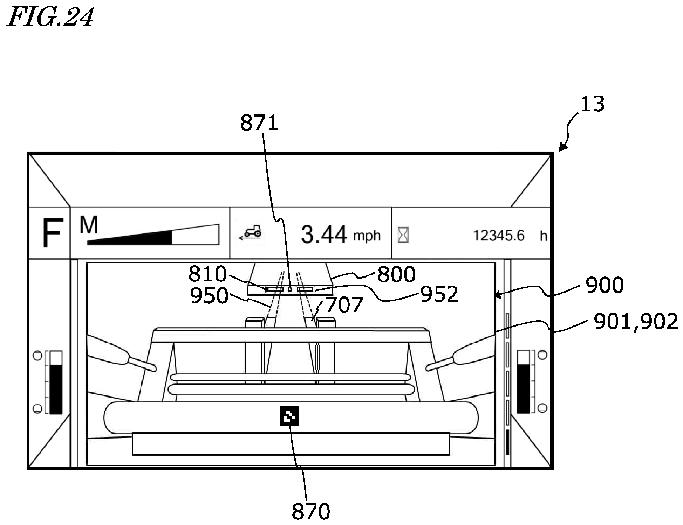

FIG. **24** is a schematic diagram illustrating an example of the superimposed image **900** including an emphasis display that emphasizes the opening **810** of the pallet **800**. The superimposed image **900** or guide image **902** in the example illustrated in FIG. **24** includes an emphasis display **952** that emphasizes the opening **810**.

The pallet **800** may have on its side surface a unique marker **871** that differs depending on the shape or type of fork. In the example illustrated in FIG. **24**, the unique marker **871** is applied to the front surface of the pallet **800** between the two openings **810**. The unique marker **871**, like the marker **870**, is, for example, a barcode, a two-dimensional code, or an AR (Augmented Reality) marker. The control device **400** may apply marker recognition to the camera image **901** including the unique marker **871** of the pallet **800**, and acquire information about the position, size, and shape of the opening **810** based on the marker recognition result.

When using an AR marker as the unique marker **871**, the control device **400** estimates the position and orientation (i.e., pose) of the marker in real space (three-dimensional space) by marker recognition, thereby determining the position and orientation of the front surface of the pallet **800**. In addition, information about the position, size, and shape of the opening **810** may be encoded by the AR marker. The control device **400** can recognize the position, size, and shape of the opening **810** by decoding the encoded information (step S71). However, the example of detecting the opening **810** is not limited to marker recognition. For example, information about the position, size, and shape of the opening **810** may be acquired by shape recognition using a template. In this way, the control device **400** may cause the display element **13** to display the superimposed image **900** including the emphasis display **952** that emphasizes the opening **810** at the position of the identified opening **810** (step S72).

According to the second implementation example, by displaying the guide display **950** on an extension line of the fork **707** and displaying the emphasis display **952** at the position of the opening **810**, the alignment of the tip portion of the fork **707** with the opening **810** may be facilitated.

The emphasis display **952** may be performed independently of the guide display **950**. The control device **400** may cause the display element **13** to display the superimposed image **900** including only the emphasis display **952**. As illustrated in the flowchart of FIG. **23**, the control device **400** may execute the process of detecting the contact portion of the work target object (step S71) and the process of displaying the position of the contact portion (step S72) regardless of whether the work vehicle is traveling forward. In addition, the control device **400** may execute the processes of steps S71 and S72 before executing the process of displaying the guide image including the guide display (step S50).

According to the information display system or guide image display control method of the present embodiment, particularly when the work vehicle is traveling forward, the control device causes the display element to display the superimposed image obtained by superimposing, on the camera image, the guide image determined from among the plurality of guide images in accordance with the type of the implement connected to the work vehicle. As a result, the guide display is determined in accordance with the type of the implement and displayed on the camera image. The guide display determined in this way makes it possible to improve operability of the implement regardless of the type of the implement. For example, it is possible to prompt the user to perform steering to guide the tip portion of the fork to the opening of the pallet along the guide display included in the guide image.

In the above-described examples, the superimposed image or camera image was displayed on the display element **13** of the meter panel unit **100**, but the present disclosure is not limited thereto. The superimposed image or camera image may also be displayed on, for example, a screen of a VT or a terminal used by the user. In this way, a VT or a terminal used by the user may also function as a portion of the information display system.

In the above-described examples, the example of displaying the guide display according to the type of attachment of the loader has been described, but the present disclosure is not limited thereto. The control device may cause the display element to display, for example, a superimposed image obtained by superimposing, on a camera image including the tip portion, a guide image including a guide display representing the predicted trajectory of the tip portion of an implement connected to the front or rear of the vehicle body via a PTO shaft.

Such a guide display may facilitate the user's operation of the implement.

The information display systems in the above embodiments can also be retrofitted to work vehicles that do not have these functions. Such systems may be manufactured and sold independently of work vehicles. Computer programs used in such systems may also be manufactured and sold independently of work vehicles. Computer programs may be provided, for example, stored on computer-readable non-transitory storage media. Computer programs may also be provided by download via telecommunication lines (e.g., the Internet).

### INDUSTRIAL APPLICABILITY

The technologies of the present disclosure are widely applicable to various types of work vehicles used in, for example, smart agriculture.

### REFERENCE SIGNS LIST

**10** meter portion, **11** first analog meter, **12** second analog meter, **13** display element, **14T** indicator region, **14L** indicator region, **14R** indicator region, **17** raised scale, **20** wall surface portion, **30** transparent cover, **30A** front surface section of transparent cover, **30B** side surface section of transparent cover, **40** arc-shaped indicator, **50** facing plate, **100** meter panel unit, **400** control device, **500** information display system

## Claims

1. An information display system for a work vehicle to which an implement is connected, the information display system comprising:
- a digital display;
- a control device to control the digital display;
- a storage device to store data of a plurality of guide images that differ depending on a type of the implement;
- a camera to acquire a camera image including at least a portion of the implement;
wherein:
- each of the plurality of guide images includes a guide display representing a predicted trajectory of the implement in a direction of travel, the predicted trajectory being predicted in accordance with a type of the implement connected to the work vehicle; and
- the control device causes the digital display to display a superimposed image obtained by superimposing, on the camera image, a guide image determined from among the plurality of guide images in accordance with the type of the implement connected to the work vehicle.

2. The information display system of claim 1, wherein:
- the implement includes a marker encoding a type of the implement;
- the control device:
- identifies the type of the implement by applying marker recognition to the camera image including the marker; and
- causes the digital display to display the superimposed image obtained by superimposing, on the camera image, the guide image corresponding to the identified type of the implement, from among the plurality of guide images.

3. The information display system of claim 1 or 2, wherein each of the plurality of guide images includes an outline display representing a portion of an outline of the implement.

4. The information display system of claim 1 or 2, wherein:
- the implement is a loader including a tip to which an attachment is detachably attached; and
- each of the plurality of guide images includes the guide display representing the predicted trajectory of the implement predicted in accordance with a type of the attachment.

5. The information display system of claim 4, wherein:
- the camera acquires the camera image including at least a portion of a work target object including a load according to the attachment of the loader;
- the control device:
- performs image processing on the camera image to detect a contact portion of the work target object that is in contact with the attachment; and
- causes the digital display to display the superimposed image including an emphasis display that emphasizes the contact portion.

6. The information display system of claim 4, wherein:
- each of the plurality of guide images includes the guide display of the attachment in a state in which the attachment is located at a lowest point that is a lower limit of a lifting range;
- the control device:
- acquires height information of the attachment relative to the lowest point; and
- corrects the guide display included in the determined guide image based on the height information.

7. The information display system of claim 4, wherein:
- the attachment is a fork; and
- the control device causes the digital display to display the superimposed image including the guide display on an extension line of the fork, and an outline display representing a portion of an outline of the fork.

8. The information display system of claim 5, wherein:
- the work target object includes a pallet including an opening into which the fork is inserted; and
- the control device causes the digital display to display the superimposed image including the emphasis display that emphasizes the opening.

9. The information display system of claim 1 or 2, further comprising a meter panel unit including the digital display.

10. A work vehicle comprising the information display system of claim 1 or 2.

11. A control method for controlling display on a digital display mounted on a work vehicle to which an implement is connected, the method comprising:
- acquiring a camera image including at least a portion of an implement;
- acquiring data of a plurality of guide images that differ depending on a type of the implement, each of the plurality of guide images including a guide display representing a predicted trajectory of the implement in a direction of travel, the predicted trajectory being predicted in accordance with a type of the implement connected to the work vehicle; and
- causing the digital display to display a superimposed image obtained by superimposing, on the camera image, a guide image determined from among the plurality of guide images in accordance with the type of the implement connected to the work vehicle.
